(19) Europäisches Patentamt
European Patent Office
Office européen des brevets

(11) EP 0 700 938 B1

(12) EUROPEAN PATENT SPECIFICATION

(45) Date of publication and mention of the grant of the patent:
**24.08.2005 Bulletin 2005/34**

(21) Application number: **94915282.1**

(22) Date of filing: **23.05.1994**

(51) Int Cl.7: **C08F 210/02**, C08F 212/02, C08F 232/06, C08F 236/04, C08F 4/42, C08F 132/06, C08F 4/48

(86) International application number:
**PCT/JP1994/000822**

(87) International publication number:
**WO 1994/028038 (08.12.1994 Gazette 1994/27)**

(54) **CYCLIC CONJUGATED DIENE POLYMER**

ZYKLISCH KONJUGIERTES DIEN-POLYMER

POLYMERE DIENE CONJUGUE CYCLIQUE

(84) Designated Contracting States:
**DE FR GB**

(30) Priority: **21.05.1993 JP 14128193**

(43) Date of publication of application:
**13.03.1996 Bulletin 1996/11**

(73) Proprietor: **Asahi Kasei Kabushiki Kaisha**
**Osaka (JP)**

(72) Inventors:
- **NATORI, Itaru**
  **Kurashiki-shi Okayama 710 (JP)**
- **KATO, Kiyoo**
  **Miyamae-ku Kawasaki-shi Kanagawa 216 (JP)**

(74) Representative: **Brookes Batchellor**
**102-108 Clerkenwell Road**
**London EC1M 5SA (GB)**

(56) References cited:
**FR-A- 1 425 276**
**GB-A- 2 044 277**
**JP-A- 55 110 108**
**JP-B- 58 039 842**
**US-A- 3 328 372**
**US-A- 4 020 251**

- **DATABASE WPI Week 8320 Derwent Publications Ltd., London, GB; AN 48463K & SU-A-216 948 (EROFEEV B Y) , 7 November 1982**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 700 938 B1

## Description

### Background of the Invention

### Technical field

The present invention relates to a cyclic conjugated diene polymer and a method for producing the same. More particularly, the present invention is concerned with a cyclic conjugated diene polymer comprising a six-membered cyclic conjugated diene monomer unit, or comprising a six-membered cyclic conjugated diene monomer unit and a monomer unit derived from a monomer other than the six-membered cyclic conjugated diene monomer, which other monomer is copolymerizable with the cyclic conjugated diene monomer, and wherein the cyclic conjugated diene polymer has a high number average molecular weight, so that it has not only excellent thermal properties in respect of, for example, a melting temperature, a glass transition temperature and a heat distortion temperature, but also excellent mechanical properties, such as high tensile modulus and high flexural modulus, and is also concerned with a method for producing such an excellent cyclic conjugated diene polymer. The present invention is further concerned with a polymerization catalyst useful for production of such a polymer as mentioned above, which catalyst has an excellent catalytic activity for not only achieving a desired high polymerization degree, but also effectively and efficiently performing a living anionic polymerization which enables a block copolymerization of a six-membered cyclic conjugated diene monomer and a monomer which is other than and copolymerizable with the six-membered cyclic conjugated diene monomer.

### Prior Art

Heretofore, various proposals have been made with respect to conjugated diene polymers. Some of the polymers produced by the techniques of such proposals have been widely used as commercially important materials.

Representative examples of known conjugated diene polymers include homopolymers, such as a polybutadiene and a polyisoprene; copolymers of block, graft, taper and random configurations, such as a butadiene-isoprene copolymer, a styrene-butadiene copolymer, a propylene-butadiene copolymer, a styrene-isoprene copolymer, an $\alpha$-methylstyrene-butadiene copolymer, an $\alpha$-methylstyrene-isoprene copolymer, an acrylonitrile-butadiene copolymer, an acrylonitrile-isoprene copolymer, a butadiene-methyl methacrylate copolymer; and hydrogenated polymers derived therefrom. These polymers have been used for various purposes in various fields. For example, these conventional polymers have been used as plastics; elastomers; materials for parts for machines, tires and belts; insulating materials; adhesives; and modifiers for other resins.

For example, in the field of thermoplastic elastomers, a block copolymer has conventionally been used which comprises a polymer chain composed of an agglomeration phase (i.e., hard segment) which is of a polymer block having a Tg (glass transition temperature) of higher than room temperature, and an elastomer phase (i.e., soft segment) which is of a polymer block having a Tg of lower than room temperature.

Representative examples of such block copolymers include a styrene-butadiene (isoprene)-styrene block copolymer and a hydrogenated product thereof.

Further, for improving various properties (such as heat resistance, flowability and adhesion properties) of the styrene-butadiene (isoprene)-styrene block copolymer or a hydrogenated product thereof, it has been widely practiced to use the block copolymer or a hydrogenated polymer thereof in the form of a block copolymer composition which is obtained by blending the above-mentioned block copolymer or a hydrogenated product thereof with another polymer, such as a polystyrene, a polyolefin, a polyphenylene ether or a styrene-butadiene diblock copolymer, or a hydrogenated product thereof.

On the other hand, various proposals have been made with respect to the method for producing a conjugated diene polymer, which is also very important from a commercial point of view.

Particularly, various studies have been made with a view toward developing a polymerization catalyst capable of providing conjugated diene polymers having a high cis-1,4-bond content, for the purpose of obtaining conjugated diene polymers having improved thermal and mechanical properties.

For example, a catalyst system comprised mainly of a compound of an alkali metal, such as lithium or sodium, and a composite catalyst system comprised mainly of a compound of a transition metal, such as nickel, cobalt or titanium, have been proposed. Some of these catalyst systems have already been employed for a commercial scale practice of polymerization of butadiene and isoprene (see, for example, End. Ing. Chem., 48, 784 (1956) and Examined Japanese Patent Application Publication No. 37-8198).

On the other hand, for achieving a further increased cis-1,4-bond content and an excellent polymerization activity, a number of studies have been made toward developing a composite catalyst system comprised of a rare earth metal compound and an organometallic compound containing a metal belonging to Group I, II or III of the Periodic

Table. Further, in connection with the study of such a catalyst system, intensive studies have also been made with respect to highly stereospecific polymerization [see, for example, J. Polym. Sci., Polym. Chem. Ed., 18, 3345 (1980); Sci, Sinica., 2/3, 734 (1980); Makromol. Chem. Suppl, 4, 61 (1981); unexamined German Patent Application Publication No. 2,848,964; Rubber Chem. Technol., 58, 117 (1985)].

Among these composite catalyst systems, a composite catalyst comprised mainly of a neodymium compound and an organoaluminum compound has been confirmed to have not only the ability to provide a desired polymer having a high cis-1,4-bond content, but also exhibits an excellent polymerization activity. Accordingly, this type of composite catalyst has already been commercially used as a catalyst for the polymerization of butadiene [see, for example, Makromol. Chem., 94, 119 (1981); Macromolecules, 15, 230 (1982)].

However, in accordance with recent remarkable progress of the techniques in this field, there has been a strong demand for the development of polymer materials having further improved properties, particularly excellent thermal properties (such as melting temperature, glass transition temperature and heat distortion temperature) and excellent mechanical properties (such as tensile modulus and flexural modulus).

As one of the most practical means for meeting such a demand, it has been attempted to develop a technique of improving the structures of the polymeric molecular chains of polymers of conjugated diene monomers (in homopolymerizing or copolymerizing not only a monomer having a relatively small steric hindrance, e.g., butadiene or isoprene, but also a monomer having a large steric hindrance, e.g., a cyclic conjugated diene monomer) so as to obtain polymer materials having excellent thermal and mechanical properties.

With respect to the homopolymerization or copolymerization of a monomer having a relatively small steric hindrance, e.g., butadiene or isoprene, catalyst systems having a polymerization activity which is satisfactory to a certain extent have been successfully developed. However, a catalyst system which exhibits a satisfactory polymerization activity in the homopolymerization or copolymerization of monomers having a large steric hindrance, e.g., a cyclic conjugated diene monomer, has not yet been developed.

That is, by conventional techniques, even homopolymerization of a cyclic conjugated diene is difficult, so that a homopolymer having a desired high molecular weight cannot be obtained. Furthermore, an attempt to copolymerize a cyclic conjugated diene with a monomer other than the cyclic conjugated diene, for the purpose of obtaining a polymer having optimized thermal and mechanical properties in order to meet a wide variety of commercial needs, has been unsuccessful with the result that the products obtained are only oligomers having a low molecular weight.

As is apparent from the above, in any of the conventional techniques, it has been impossible to obtain a cyclic conjugated diene polymer which has satisfactory properties. Therefore, it has been strongly desired to develop a high molecular weight cyclic conjugated diene polymer which can satisfy the commercial demand.

J. Am. Chem. Soc., 81, 448 (1959) discloses a cyclohexadiene homopolymer and a polymerization method therefor, which homopolymer is obtained by polymerizing 1,3-cyclohexadiene (a typical example of a cyclic conjugated diene monomer), using a composite catalyst comprised of titanium tetrachloride and triisobutylaluminum. However, the polymerization method disclosed in this prior art document is disadvantageous in that the use of a large amount of the catalyst is necessary, and the polymerization reaction must be conducted for a prolonged period of time, and that the obtained polymer has only an extremely low molecular weight. Therefore, the polymer obtained by the technique of this prior art document is of no commercial value.

Further, J. Polym. Sci., Pt. A, 2,3277 (1964) discloses methods for producing a cyclohexadiene homopolymer, in which the polymerization of 1,3-cyclohexadiene is conducted by various polymerization methods, such as radical polymerization, cationic polymerization, anionic polymerization and coordination polymerization. In any of the methods disclosed in this prior art document, however, the polymers obtained have only an extremely low molecular weight. Therefore, the polymers obtained by the techniques of this prior art document are of no commercial value.

Unexamined British Patent Application Publication No. 1,042,625 discloses a method for producing a cyclohexadiene homopolymer, in which the polymerization of 1,3-cyclohexadiene is conducted using a large amount of an organolithium compound as a catalyst.

In the polymerization method disclosed in unexamined British Patent Application Publication No. 1,042,625, the catalyst must be used in an amount as large as 1 to 2 wt%, based on the total weight of the monomers. Therefore, this method is economically disadvantageous. Further, the polymer obtained by this method has only an extremely low molecular weight. Moreover, in this prior art document, there is no teaching or suggestion of obtaining a copolymer. Furthermore, the method of this prior art document has disadvantages in that the polymer obtained contains a large amount of catalyst residue, which is very difficult to remove from the polymer, so that the polymer obtained by this method is of no commercial value.

J. Polym. Sci., Pt. A, 3, 1553 (1965) discloses a cyclohexadiene homopolymer, which is obtained by polymerizing 1,3-cyclohexadiene using an organolithium compound as a catalyst. In this prior art document, the polymerization reaction must be continued for a period as long as 5 weeks, however, the polymer obtained has a number average molecular weight of only 20,000 or less.

Polym. Prepr. (Amer. Chem. Soc., Div. Polym. Chem.) 12, 402 (1971) teaches that when the polymerization

of 1,3-cyclohexadiene is conducted using an organolithium compound as a catalyst, the upper limit of the number average molecular weight of the cyclohexadiene homopolymer obtained is only from 10,000 to 15,000. Further, this document teaches that the reason for such a small molecular weight resides in that, concurrently with the polymerization reaction, not only does a transfer reaction occur, which is caused by the abstraction of a lithium cation present in the polymer terminal, but also a reaction of elimination of lithium hydride occurs.

Die Makromolekulare Chemie., 163, 13 (1973) discloses a cyclohexadiene homopolymer which is obtained by polymerizing 1,3-cyclohexadiene using a large amount of an organolithium compound as a catalyst. However, the polymer obtained in this prior art document is an oligomer having a number average molecular weight of only 6,500.

European Polymer J., 9, 895 (1973) discloses a copolymer which is obtained by copolymerizing 1,3-cyclohexadiene with butadiene and/or isoprene, using a n-allylnickel compound as a polymerization catalyst.

However, the polymer obtained in this prior art document is an oligomer having an extremely low molecular weight. Further, it has been reported that the polymer of this prior art document has a single glass transition temperature, which suggests that the polymer has a random copolymer structure.

Kobunshi Ronbun-shu (Collection of theses concerning polymers), Vol. 34, No. 5, 333 (1977) discloses a method for synthesizing a copolymer of 1,3-cyclohexadiene and acrylonitrile using zinc chloride as a polymerization catalyst. However, the alternating copolymer obtained in this prior art document is an oligomer having an extremely low molecular weight.

J. Polym. Sci., Polym. Chem. Ed., 20, 901 (1982) discloses a cyclohexadiene homopolymer which is obtained by polymerizing 1,3-cyclohexadiene using an organosodium compound as a catalyst. In this prior art document, the organosodium compound used is sodium naphthalene, and a radical anion derived from the sodium naphthalene forms a dianion which functions as a polymerization initiation site.

This means that although the cyclohexadiene homopolymer reported in this document has an apparent number average molecular weight of 38,700, this homopolymer is actually only a combination of two polymeric molecular chains, each having a number average molecular weight of 19,350, which chains respectively extend from the polymerization initiation site in two different directions.

Further, in the polymerization method disclosed in this document, the polymerization reaction needs to be conducted at an extremely low temperature. Therefore, the technique of this prior art document is of no commercial value.

Makromol. Chem., 191, 2743 (1990) discloses a method for polymerizing 1,3-cyclohexadiene using a polystyryllithium as a polymerization initiator. In this prior art document, it is described that concurrently with the polymerization reaction, not only a transfer reaction, which is caused by the abstraction of a lithium cation present in the polymer terminal, but also a reaction of elimination of lithium hydride vigorously occurs. Further, it is reported that even though the polymerization is conducted using a polystyryllithium as a polymerization initiator, a styrene-cyclohexadiene block copolymer cannot be obtained at room temperature, but the product obtained is only a cyclohexadiene homopolymer.

Further, in this prior art document, it is reported that when the polymerization reaction is conducted at -10 °C, a styrene-cyclohexadiene block copolymer having a molecular weight of about 20,000 is obtained in extremely low yield, together with a cyclohexadiene homopolymer.

However, the content of cyclohexadiene blocks in the obtained copolymer is extremely low. Further, this prior art document has no teaching or suggestion about not only a block copolymer of cyclohexadiene with a chain conjugated diene monomer, but also a multiblock copolymer which is an at least-tri-block copolymer of cyclohexadiene, or a radial block copolymer of cyclohexadiene.

Furthermore, GB-A-2 044 277, US-A-4 020 251, US-A-3 328 372 and SU-A-210948 are noted as prior art references. However, GB-A-2 044 277 and US-A-3 328 372 do not disclose 6-membered cyclic conjugated diene polymers but cyclopentadiene polymers only. US-A-4 020 251 and SU-A-210948, respectively, disclose actual production of copolymers containing cyclohexadiene and cyclohexadiene homopolymers by use of a complex of butyllithium with an ether (e.g., tetrahydrofuran, THF) as a catalyst, in which the resultant polymers have small number average molecular weights and large molecular weight distributions.

As can be easily understood from the above, in any of the conventional techniques, it has been impossible to obtain a cyclic conjugated diene copolymer which has excellent properties so that it can be satisfactorily used as an industrial material. Needless to say, a production process for such a cyclic conjugated diene copolymer is not known.

## SUMMARY OF THE INVENTION

In these situations, the present inventors have made extensive and intensive studies with a view toward developing a novel cyclic conjugated diene polymer comprising a six-membered cyclic conjugated diene monomer unit, or comprising a six-membered cyclic conjugated diene monomer unit and a monomer unit derived from a monomer other than the six-membered cyclic conjugated diene monomer, which other monomer is copolymerizable with the six-membered cyclic conjugated diene monomer, and wherein the cyclic conjugated diene polymer has a high number

average molecular weight, so that it has not only excellent thermal properties in respect of, for example, a melting temperature, a glass transition temperature and a heat distortion temperature, but also excellent mechanical properties, such as high tensile modulus and high flexural modulus, and a method for producing such an excellent cyclic conjugated diene polymer. As a result, the present inventors have successfully developed a polymerization catalyst useful for production of such a polymer as mentioned above, which catalyst has an excellent catalytic activity for not only achieving a desired high polymerization degree, but also effectively and efficiently performing a living anionic polymerization which enables block copolymerization of a six-membered cyclic conjugated diene monomer and a monomer which is other than and copolymerizable with the six-membered cyclic conjugated diene monomer. With such a polymerization catalyst, it has for the first time become possible to synthesize a high molecular weight six-membered cyclic conjugated diene polymer which has never been reported. The present invention has been completed, based on these findings.

Accordingly, it is an object of the present invention to provide a cyclic conjugated diene polymer comprising a six-membered cyclic conjugated diene monomer unit, or comprising a six-membered cyclic conjugated diene monomer unit and a monomer unit derived from a monomer other than the six-membered cyclic conjugated diene monomer, which other monomer is copolymerizable with the cyclic conjugated diene monomer, and wherein the cyclic conjugated diene polymer has a high number average molecular weight, so that it has not only excellent thermal properties in respect of, for example, a melting temperature, a glass transition temperature and a heat distortion temperature, but also excellent mechanical properties, such as high tensile modulus and high flexural modulus.

It is another object of the present invention to provide an effective and efficient method for producing such a cyclic conjugated diene polymer as mentioned above.

It is a further object of the present invention to provide a polymerization catalyst useful for production of such a polymer as mentioned above, which catalyst has an excellent catalytic activity for not only achieving a desired high polymerization degree, but also effectively and efficiently performing a living anionic polymerization which enables block copolymerization of a six-membered cyclic conjugated diene monomer and a monomer which is other than and copolymerizable with the six-membered cyclic conjugated diene monomer.

In one aspect of the present invention, there is provided a cyclic conjugated diene polymer comprising a main chain represented by the following formula (I):

$$[-(A)_{\ell}-(B)_{m}] \quad (I)$$

wherein A and B are monomer units constituting said main chain in which monomer units A and B are arranged in any order, and $\ell$ and m are, respectively, weight percentages of monomer units A and B, based on the total weight of monomer units A and B; wherein:

A is selected from the class consisting of cyclic conjugated diene monomer units each being independently represented by the following formula (III):

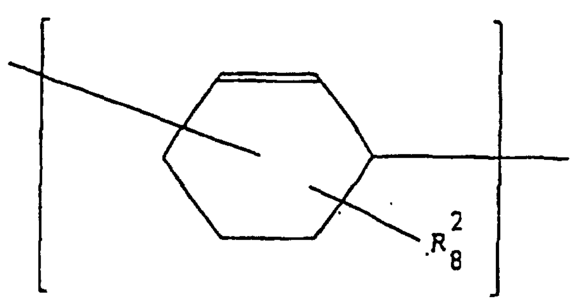

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.

B is selected from either the class consisting of chain conjugated diene monomer units or the class consisting of vinyl aromatic monomer units; and

wherein:

$\ell$ and m satisfy the following requirements:

$\ell$ + m = 100,
0.5 ≤ $\ell$ ≤ 100, and
0 ≤ m < 100,

with the proviso that when $\ell$ = 100, said cyclic conjugated diene polymer has a number average molecular weight of from 40,000 to 5,000,000. and when 0.5 ≤ $\ell$ < 100, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene.

In a further aspect of the present invention there is provided a method for producing a cyclic conjugated diene polymer comprising a main chain represented by the following formula (I):

$$[ -(A)_{\ell} -(B)_{m} ] \quad (I)$$

wherein A and B are monomer units constituting said main chain in which monomer units A and B are arranged in any order, and $\ell$ and m are, respectively, weight percentages of monomer units A and B, based on the total weight of monomer units A and B; wherein:

A is selected from the class consisting of cyclic conjugated diene monomer units each being independently represented by the following formula (III):

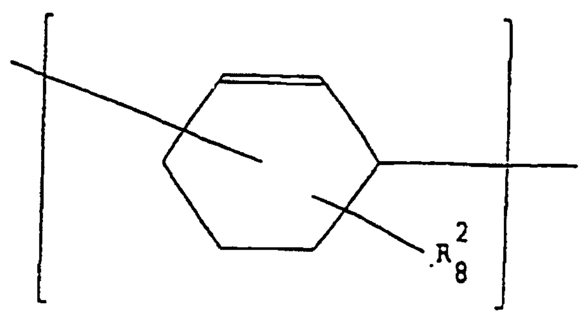

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.
B is selected from either the class consisting of chain conjugated diene monomer units or the class consisting of vinyl aromatic monomer units; and

wherein:

$\ell$ and m satisfy the following requirements:

$\ell$ + m = 100,
0.5 ≤ $\ell$ ≤ 100, and
0 ≤ m < 100,

with the proviso that when $\ell$ = 100, said cyclic conjugated diene polymer has a number average molecular weight of from 40,000 to 5,000,000, and when 0.5 ≤ $\ell$ < 100, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene,
which comprises polymerizing at least one cyclic conjugated diene monomer, or copolymerizing at least one cyclic conjugated diene monomer and at least one comonomer copolymerizable therewith in the presence of a catalyst comprised of a binuclear or multinuclear complex of an organometallic compound containing a metal belonging to Group IA of the Periodic Table with a complexing agent comprised of an amine, wherein the copolymerization of said at least one cyclic conjugated diene monomer and said at least one comonomer is performed to produce a block copolymer, said at least one comonomer being selected from either the class consisting of chain conjugated diene monomers or the class consisting of vinyl aromatic monomers.

## BRIEF DESCRIPTION OF THE DRAWINGS

In the accompanying drawings:

FIG. 1 is a chart showing the $^1$H-NMR spectrum of the cyclic conjugated diene homopolymer of the present invention, obtained in Example 3, which was measured using a deuteride form of 1,2-dichlorobenzene as a solvent;
FIG. 2 is a chart showing the viscoelasticity spectra of the cyclic conjugated diene homopolymer of the present invention, obtained in Example 9;
FIG. 3 is a chart showing the $^1$H-NMR spectrum of the cyclic conjugated diene copolymer of the present invention, obtained in Example 12, which was measured using a deuteride form of chloroform as a solvent;
FIG. 4 is a chart showing the $^1$H-NMR spectrum of the cyclic conjugated diene copolymer of the present invention, obtained in Example 16, which was measured using a deuteride form of chloroform as a solvent;
FIG. 5 is a chart showing the $^1$H-NMR spectrum of the cyclic conjugated diene copolymer of the present invention, obtained in Example 19, which was measured using a deuteride form of chloroform as a solvent;
FIG. 6 is a chart showing the $^1$H-NMR spectrum of the cyclic conjugated diene block copolymer composition of the present invention, obtained in Example 21, which was measured using a deuteride form of 1,2-dichlorobenzene as a solvent;
FIG. 7 is a GPC chart of the cyclic conjugated diene block copolymer composition of the present invention, obtained in Example 21;
FIG. 8 is a chart showing the DMA spectra of the cyclic conjugated diene block copolymer composition of the present invention, obtained in Example 21;
FIG. 9 is a chart showing the $^1$H-NMR spectrum of the cyclic conjugated diene block copolymer composition of the present invention, obtained in Example 22, which was measured using a deuteride form of 1,2-dichlorobenzene as a solvent;
FIG. 10 is a GPC chart of the cyclic conjugated diene block copolymer composition of the present invention, obtained in Example 22; and
FIG. 11 is a chart showing the DMA spectra of the cyclic conjugated diene block copolymer composition of the present invention, obtained in Example 23.

## DETAILED DESCRIPTION OF THE INVENTION

For easy understanding of the present invention, the essential feature and various embodiments of the present invention are enumerated below.

1. A cyclic conjugated diene polymer comprising a main chain represented by the following formula (I):

$$[ \text{—}(A)_{\ell} \text{—}(B)_{m} ] \qquad (I)$$

wherein A and B are monomer units constituting said main chain in which monomer units A and B are arranged in any order, and $\ell$ and m are, respectively, weight percentages of monomer units A and B, based on the total weight of monomer units A and B;
wherein:

A is selected from the class consisting of cyclic conjugated diene monomer units each being independently represented by the following formula (III):

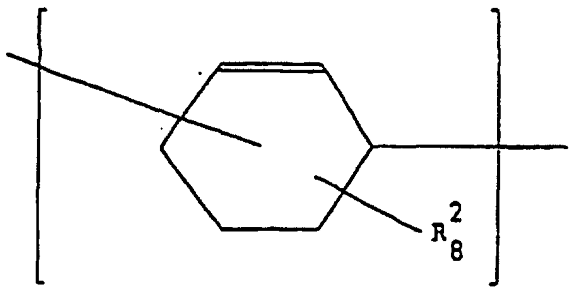

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.

B is selected from either the class consisting of chain conjugated diene monomer units or the class consisting of vinyl aromatic monomer units; and

wherein:

$\ell$ and m satisfy the following requirements:

$\ell + m = 100$,
$0.5 \leq \ell \leq 100$, and
$0 \leq m < 100$,

with the proviso that when $\ell = 100$, said cyclic conjugated diene polymer has a number average molecular weight of from 40,000 to 5,000,000, and when $0.5 \leq \ell < 100$, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene.

2. The cyclic conjugated diene polymer according to item 1 above, wherein $\ell = 100$, and wherein said A monomer units are comprised of cyclic conjugated diene monomer units which are the same or different.

3. The cyclic conjugated diene polymer according to item 1 above, wherein, in said block copolymer, said A monomer units are comprised of cyclic conjugated diene monomer units which are the same or different.

4. The cyclic conjugated diene polymer according to item 1 above, wherein said block copolymer is an at least-tri-block copolymer having a number average molecular weight of from 25,000 to 1,000,000 and comprising at least two Y blocks each containing at least one A monomer unit, and at least one Z block comprised mainly of chain conjugated diene monomer units as monomer units B, wherein the weight ratio of said at least two Y blocks to said at least one Z block is from 3/97 to 97/3.

5. The cyclic conjugated diene polymer according to item 1 above, wherein said block copolymer is a diblock copolymer having a number average molecular weight of from 25,000 to 1,000,000 and comprising one Y block containing at least one A monomer unit, and one Z block comprised mainly of chain conjugated diene monomer units as monomer units B.

6. The cyclic conjugated diene polymer according to any one of items 1 to 5 above, wherein at least one of said cyclic conjugated diene monomer units is a 1,3-cyclohexadiene monomer unit or a derivative thereof.

7. A cyclic conjugated diene copolymer composition comprising (α) an at least-tri-block copolymer of item 4 above and (β) a diblock copolymer of item 5 above, wherein the proportions of components (α) and (β) are, respectively, from 5 to 95 % by weight and from 95 % to 5 % by weight, based on the total weight of components (α) and (β).

8. The composition according to item 7 above, wherein at least a part of said Y block is comprised of at least one

cyclic conjugated diene monomer unit selected from the class consisting of a 1,3-cyclohexadiene monomer unit and a derivative thereof, and said Z block is comprised mainly of units of at least one member selected from the class consisting of a 1,3-butadiene monomer unit and an isoprene monomer unit.

9. The composition according to item 7 above, wherein said at least-tri-block copolymer (α) has a configuration represented by a formula selected from the group consisting of $Y - (Z - Y)_q$, $(Y - Z)_r$, $Z - (Y - Z)_r$, $[(Z - Y)_q]_r$, $[(Y - Z)_q]_r$, $[(Z - Y)_q-Z]_r$, and $[(Y - Z)_q-Y]_r$ in which Y and Z are as defined above, q is an integer of 1 or more, and r is an integer of 2 or more.

10. A method for producing a cyclic conjugated diene polymer comprising a main chain represented by the following formula

$$[ -(A)_{\ell}- -(B)_m- ] \quad (I)$$

wherein A and B are monomer units constituting said main chain in which monomer units A and B are arranged in any order, and ℓ and m are, respectively, weight percentages of monomer units A and B, based on the total weight of monomer units A and B;

wherein:

A is selected from the class consisting of cyclic conjugated diene monomer units each being independently represented by the following formula (III):

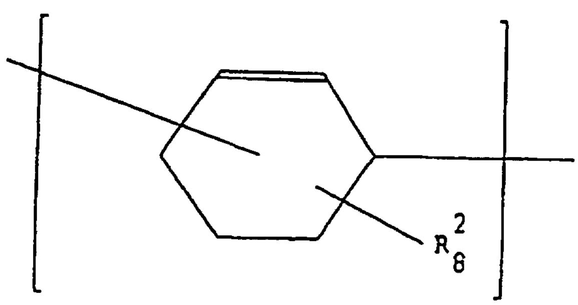

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.

B is selected from either the class consisting of chain conjugated diene monomer units or the class consisting of vinyl aromatic monomer units; and

wherein:

ℓ and m satisfy the following requirements:

$\ell + m = 100$,
$0.5 \leq \ell \leq 100$, and
$0 \leq m < 100$,

with the proviso that when $\ell = 100$, said cyclic conjugated diene polymer has a number average molecular weight of from 40,000 to 5,000,000, and when $0.5 \leq \ell < 100$, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene,
which comprises polymerizing at least one cyclic conjugated diene monomer, or copolymerizing at least one cyclic

conjugated diene monomer and at least one comonomer copolymerizable therewith in the presence of a catalyst comprised of a binuclear or multinuclear complex of an organometallic compound containing a metal belonging to Group IA of the Periodic Table with a complexing agent comprised of an amine, wherein the copolymerization of said at least one cyclic conjugated diene monomer and said at least one comonomer is performed to produce a block copolymer, said at least one comonomer being selected from either the class consisting of chain conjugated diene monomers or the class consisting of vinyl aromatic monomers.

11. The method according to item 10 above, wherein said catalyst is one which has been prepared prior to the polymerization.

12. A polymerization catalyst comprising a binuclear or multinuclear complex of an organometallic compound containing a metal belonging to Group IA of the Periodic Table with a complexing agent comprised of an amine.

In the present invention, the monomer units of the polymer are named in accordance with a nomenclature such that the names of the original monomers from which the monomer units are derived, as such, are used with the term "unit" attached thereto. For example, the term "cyclic conjugated diene monomer unit" means a monomer unit which is formed in a polymer obtained by the polymerization of a cyclic conjugated diene monomer and which has a molecular structure such that a cycloolefin corresponding to the cyclic conjugated diene monomer is bonded at two carbon atoms of a skeleton thereof.

As mentioned above, the cyclic conjugated diene polymer of the present invention is a polymer comprising a main chain which is comprised partly or entirely of monomer units derived from the cyclic conjugated diene monomers.

Representative examples of cyclic conjugated diene polymers of the present invention include a polymer comprising a main chain which is comprised solely of at least one monomer unit selected from the class consisting of cyclic conjugated diene monomer units, and a polymer comprising a main chain which is comprised of at least one monomer unit selected from the class consisting of cyclic conjugated diene monomer units and a monomer unit derived from at least one comonomer copolymerizable with the conjugated diene monomer.

More specific examples of the cyclic conjugated diene polymer of the present invention include a homopolymer of a cyclic conjugated diene monomer, a copolymer of at least two types of cyclic conjugated diene monomers, and a copolymer of at least one cyclic conjugated diene monomer and at least one comonomer copolymerizable with the cyclic conjugated diene monomer.

Most preferred examples of the cyclic conjugated diene polymer of the present invention include a polymer comprising a main chain which is comprised of at least one monomer unit selected from the class consisting of cyclic conjugated diene monomer units having a cyclohexene ring in a molecular structure thereof.

In the present invention, the term "cyclic conjugated diene monomer" means a cyclic conjugated diene having a 6-membered carbocyclic structure.

Examples of cyclic conjugated diene monomers include 1,3-cyclopentadiene, 1,3-cyclohexadiene, 1,3-cycloheptadiene, 1,3-cyclooctadiene, and derivatives thereof. Preferred examples of cyclic conjugated diene monomers include 1,3-cyclohexadiene and 1,3-cyclohexadiene derivatives, or a cyclic conjugated diene monomer having in its molecule a 6-membered carbocyclic structure attached thereto. Of these, 1,3-cyclohexadiene is most preferred.

In the present invention, as examples of comonomers copolymerizable with the cyclic conjugated diene monomer, there can be mentioned monomers which can be polymerized by anionic polymerization.

Examples of such monomers include chain conjugated diene monomers, such as 1,3-butadiene, isoprene, 2,3-dimethyl-1,3-butadiene, 1,3-pentadiene and 1,3-hexadiene; and vinyl aromatic monomers, such as styrene, $\alpha$-methylstyrene, o-methylstyrene, p-methylstyrene, p-tert-butylstyrene, 2,4-dimethylstyrene, divinylbenzene, vinylnaphthalene, diphenylethylene and vinylpyridine. Each of these monomers can be used individually or in combination.

In the present invention, the copolymer may be a block copolymer, such as a diblock, a triblock, a tetrablock, a multiblock or a radial block copolymer, or a taper block copolymer.

In the cyclic conjugated diene polymer of the present invention, the content of the cyclic conjugated diene monomer unit may vary depending on the intended use of the polymer. However, the content of the cyclic conjugated diene monomer unit is within the range of from 0.5 to 100 wt%, preferably from 1 to 100 wt%, based on the weight of the main chain of the cyclic conjugated diene polymer.

Further, for obtaining a cyclic conjugated diene polymer of the present invention which can be used in a field where the polymer is required to have high thermal and mechanical properties, it is recommended that the content of the cyclic conjugated diene monomer unit in the cyclic conjugated diene polymer be within the range of from 5 to 100 wt%, more preferably from 10 to 100 wt%, most preferably from 15 to 100 wt%, based on the weight of the main chain of the cyclic conjugated diene polymer.

For obtaining a cyclic conjugated diene polymer of the present invention which can be used as a material for a mechanical part, it is preferred that the number average molecular weight of the polymer be within the range of from

25,000 to 5,000,000. From the viewpoint of productivity in the commercial scale production of such a polymer, it is recommended that the number average molecular weight of the polymer be within the range of from 25,000 to 3,000,000, more preferably within the range of from 30,000 to 2,000,000, still more preferably from 35,000 to 1,000,000. The most preferred range is from 40,000 to 500,000.

When the cyclic conjugated diene polymer of the present invention comprises a main chain which is comprised only of at least one monomer unit selected from the class consisting of the cyclic conjugated diene monomer units, the number average molecular weight of the polymer is within the range of from 40,000 to 5,000,000 in terms of the value obtained using a calibration curve of a standard polystyrene.

When the number average molecular weight of such a polymer is less than 40,000, the polymer is likely to become markedly brittle, so that the commercial value of the polymer becomes extremely low. From the viewpoint of productivity in the commercial scale production of such a polymer, the number average molecular weight of the polymer is preferably within the range of from 40,000 to 2,000,000, more preferably from 40,000 to 1,000,000. The most preferred range is from 40,000 to 500,000.

With respect to the cyclic conjugated diene polymer of the present invention in which the main chain is comprised only of at least one monomer unit selected from the class consisting of the cyclic conjugated diene monomer units, for controlling the molecular weight of the polymer or for obtaining it in the form of a star shaped polymer, it can assume a configuration such that the terminals of a plurality of polymeric molecular chains are bonded using a conventional at least-bi-functional coupling agent, such as dimethyldichlorosilane, methyltrichlorosilane, dimethyldibromosilane, methyltribromosilane, titanocene dichloride, methylene chloride, methylene bromide, chloroform, carbon tetrachloride, silicon tetrachloride, titanium tetrachloride, tin tetrachloride, an epoxidized soybean oil, or an ester.

With respect to the cyclic conjugated diene polymer of the present invention which is a copolymer comprising at least one monomer unit selected from the class consisting of cyclic conjugated diene monomer units and the monomer unit derived from at least one comonomer copolymerizable with the cyclic conjugated diene monomer, the molecular weight of the polymer can be selected according to the intended use of the polymer. However, the number average molecular weight of such a polymer in terms of the value obtained using a calibration curve of a standard polystyrene is generally within the range of from 25,000 to 5,000,000, preferably from 25,000 to 3,000,000, more preferably from 30,000 to 2,000,000, still more preferably from 35,000 to 1,000,000. The most preferred range is from 40,000 to 500,000.

When the number average molecular weight of such a polymer is less than 25,000, the polymer is likely to be a markedly brittle solid substance or a viscous liquid, so that the commercial value of the polymer as an industrial material becomes low.

On the other hand, when the number average molecular weight of such a polymer is more than 5,000,000, the polymer is disadvantageous in various aspects from the commercial viewpoint. For example, a cyclic conjugated diene copolymer having such a high molecular weight has disadvantages in that a prolonged period of time is needed for the polymerization reaction, and that the melt viscosity of the polymer obtained becomes high.

In the present invention, the number average molecular weight of the polymer is given in terms of the value obtained using a calibration curve of a standard polystyrene.

When the cyclic conjugated diene polymer of the present invention is a cyclic conjugated diene block copolymer containing a plurality of different polymer blocks in the polymeric molecular chain thereof, the polymer block may be a polymer block comprised of monomer units derived only from at least one type of cyclic conjugated diene monomer, a polymer block comprised of a monomer unit derived from at least one type of cyclic conjugated diene monomer and a monomer unit derived from at least one type of comonomer copolymerizable with the cyclic conjugated diene, or a polymer block comprised of monomer units derived from at least one comonomer copolymerizable with the cyclic conjugated diene monomer. For attaining various purposes, various types of polymer blocks can be designed and polymerized. By an appropriate choice and combination of such polymer blocks, a cyclic conjugated diene block copolymer having suitable properties for the intended use can be obtained.

In the present invention, when a part or all of a polymer block is comprised of monomer units selected from the class consisting of cyclic conjugated diene monomer units, it is recommended that the polymer block contain a contiguous arrangement of at least 10 cyclic conjugated diene monomer units, preferably 20 or more cyclic conjugated diene monomer units, more preferably 30 or more cyclic conjugated diene monomer units, from the viewpoint of improvement in thermal and mechanical properties of the cyclic conjugated diene block copolymer of the present invention.

As a method for producing a cyclic conjugated diene block copolymer of the present invention, there can be mentioned a method which comprises preparing a block unit polymer comprised of monomer units derived from at least one type of cyclic conjugated diene monomer, a block unit polymer comprised of monomer units derived from at least one cyclic conjugated diene monomer and a monomer unit derived from at least one type of comonomer copolymerizable with the cyclic conjugated diene monomer, and a block unit polymer comprised of monomer units derived from at least one type of comonomer copolymerizable with the cyclic conjugated diene monomer; choosing an appropriate combination of these block unit polymers; and polymerization-bonding the combination of block unit polymers together, thereby obtaining a cyclic conjugated diene block copolymer having suitable properties for the intended use of the polymer. If desired, the cyclic conjugated diene block copolymer can be subjected to hydrogenation, with the proviso that the carbon-to-carbon double bond contained in the molecular structure of the cyclic conjugated diene monomer unit should not be saturated by hydrogenation.

Specific examples of preferred modes of the method of the present invention include the following modes.

One mode of the method comprises the steps of forming by polymerization a block unit polymer containing a monomer unit derived from at least one type of cyclic conjugated diene monomer, or a block unit polymer derived only from the cyclic conjugated diene monomer; and polymerizing the block unit polymer with at least one type of comonomer copolymerizable with the cyclic conjugated diene monomer, wherein the comonomer is successively bonded to one or both terminals of the block unit polymer by polymerization. If desired, the block copolymer obtained may be subjected to hydrogenation.

Another mode of the method comprises the steps of polymerizing at least one type of comonomer copolymerizable with a cyclic conjugated diene monomer to obtain a block unit polymer; and polymerizing the block unit polymer with at least one cyclic conjugated diene monomer, and optionally with at least one type of comonomer copolymerizable with the cyclic conjugated diene monomer, wherein the cyclic conjugated diene monomer and the optional comonomer are successively bonded to one or both terminals of the block unit polymer by polymerization. If desired, the block copolymer obtained may be subjected to hydrogenation.

A further mode of the method comprises the steps of forming by polymerization a block unit polymer containing a monomer unit derived from at least one cyclic conjugated diene monomer, or a block unit polymer derived only from the cyclic conjugated diene monomer; polymerizing the block unit polymer with at least one type of comonomer copolymerizable with the cyclic conjugated diene monomer to obtain a polymer; and successively bonding to the polymer by polymerization a block unit polymer containing a monomer unit derived from at least one cyclic conjugated diene monomer or a block unit polymer derived only from the cyclic conjugated diene monomer. If desired, the block copolymer obtained may be subjected to hydrogenation.

Still a further mode of the method comprises the steps of polymerizing at least one type of comonomer copolymerizable with the cyclic conjugated diene monomer to obtain a block unit polymer; polymerizing the block unit polymer with a block unit polymer containing a monomer unit derived from at least one cyclic conjugated diene monomers or a block unit polymer derived only from the cyclic conjugated diene polymer; and successively bonding to the resultant polymer by polymerization at least one type of comonomer copolymerizable with the cyclic conjugated diene monomer. If desired, the block copolymer obtained may be subjected to hydrogenation.

Still a further mode of the method comprises the steps of forming by polymerization a block unit polymer containing a monomer unit derived from at least one cyclic conjugated diene monomer or a block unit polymer derived only from the cyclic conjugated diene monomer; polymerizing the block unit polymer with at least one type of comonomer copolymerizable with the cyclic conjugated diene monomer to obtain a polymer; and bonding the terminals of the polymeric molecular chain of the polymer using a conventional at least-bi-functional coupling agent (such as dimethyldichlorosilane, methyltrichlorosilane, dimethyldibromosilane, methyltribromosilane, titanocene dichloride, methylene chloride, methylene bromide, chloroform, carbon tetrachloride, silicon tetrachloride, titanium tetrachloride, tin tetrachloride, an epoxidized soybean oil, or an ester). If desired, the block copolymer obtained may be subjected to hydrogenation.

Still a further mode of the method comprises the steps of forming by polymerization a block unit polymer containing a monomer unit derived from at least one cyclic conjugated diene monomer or a block unit polymer derived only from the cyclic conjugated diene monomer; introducing a functional group to one or both terminals of the block unit polymer using a terminal modifier (such as ethylene oxide, propylene oxide, cyclohexene oxide, carbon dioxide, or an acid chloride), to obtain a functional block unit polymer (if desired, the obtained functional block unit polymer may be subjected to hydrogenation); and bonding the functional block unit polymer thus obtained to another polymer having a functional group which can be bonded to the functional group of the above-obtained functional block unit polymer. Examples of such another polymer include a polyamide, a polyester, a polyketone, a polyimide, a polysulfide, a polysulfone; a polystyrene and a polyolefin.

Still a further mode of the method comprises steps of forming by polymerization a block unit polymer containing a monomer unit derived from at least one cyclic conjugated diene monomer or a block unit polymer derived only from the cyclic conjugated diene monomer; polymerizing the block unit polymer with at least one type of comonomer copolymerizable with the cyclic conjugated diene monomer to obtain a polymer; introducing a functional group to one or both terminals of the thus obtained polymer using a terminal modifier (such as ethylene oxide, propylene oxide, cyclohexene oxide, carbon dioxide or an acid chloride) to obtain a functional polymer (if desired, the functional polymer may be subjected to hydrogenation); and bonding the thus obtained functional polymer to another polymer having a functional group which can be bonded to the functional group of the above functional polymer.

Still a further mode of the method comprises polymerizing at least one cyclic conjugated diene monomer with

at least one type of comonomer copolymerizable with the cyclic conjugated diene monomer, wherein the at least one comonomer has a different polymerization rate from that of the cyclic conjugated diene monomer, to thereby obtain a taper block copolymer. If desired, the block copolymer obtained may be subjected to hydrogenation.

Still a further mode of the method comprises polymerizing a cyclic conjugated diene monomer and at least one type of comonomer copolymerizable with the cyclic conjugated diene monomer, wherein the ratio of the cyclic conjugated diene monomer to the at least one comonomer is not a unity. If desired, the block copolymer obtained may be subjected to hydrogenation.

In the present invention, the block unit polymer comprised of at least one monomer unit selected from the class consisting of cyclic conjugated diene monomer units may further comprise a monomer unit derived from at least one comonomer copolymerizable with the cyclic conjugated diene monomer.

Further, in the present invention, the block unit polymer comprised of a monomer unit derived from at least one comonomer copolymerizable with the cyclic conjugated diene monomer may further comprise at least one monomer unit selected from the class consisting of cyclic conjugated diene monomer units.

In the present invention, with respect to monomer units derived from at least one type of cyclic conjugated diene monomer and to block unit polymers comprised of such monomer units, it is most preferred to use a monomer unit comprised of a cyclohexene ring and use a block unit polymer comprising a monomer unit comprised of a cyclohexene ring or consisting of monomer units each comprised of a cyclohexene ring.

With respect to the cyclic conjugated diene monomer units which are contained as a part or all of the monomer units constituting the main chain of the cyclic conjugated diene polymer of the present invention, there can be mentioned those which are represented by the following formula (III):

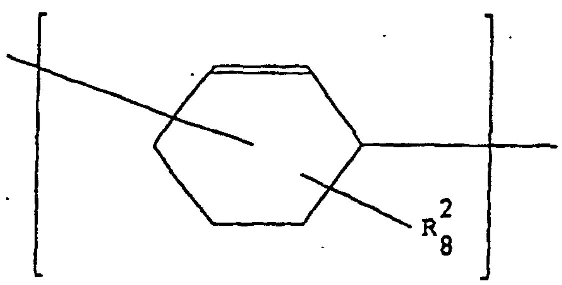

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.

In above formula (III), it is preferred that the alkyl group have 1 to 10 carbon atoms, the unsaturated aliphatic hydrocarbon group have 2 to 10 carbon atoms, the aryl group have 5 to 10 carbon atoms, the cycloalkyl group have 5 to 10 carbon atoms, the cyclodienyl group have 5 to 10 carbon atoms, and the heterocyclic group have a 5 to 8-membered ring structure.

Specific examples of substituent $R^2$ include a methyl group, an ethyl group, an n-propyl group, an isopropyl group, an n-butyl group, a sec-butyl group, a tert-butyl group, a pentyl group, a hexyl group, a cyclopentyl group, a cyclohexyl group, a vinyl group, a phenyl group, a tolyl group, a naphthyl group, a cyclopentadienyl group, an indenyl group, a pyridyl group, and a piperidyl group.

In the present invention, for obtaining a cyclic conjugated diene block copolymer which can be used as a thermoplastic elastomer or a special high impact, transparent resin, or obtaining a composition comprising such a block copolymer, it is necessary that the block copolymer be comprised of at least two agglomeration phases (blocks) and at least one elastomer phase (block), and that these two types of blocks form a microdomain structure. In the polymeric molecular chain of such a block copolymer, the agglomeration phase functions as a physical crosslinking site at a temperature lower than Tg, so that the block copolymer has elastomeric properties. On the other hand, at Tg or a temperature higher than Tg, the agglomeration phase becomes fluid, so that the block copolymer is imparted with flowability. Therefore, in the case of the latter, it becomes possible to perform an injection molding or a recycling of the block copolymer.

As mentioned above, a preferred form of the cyclic conjugated diene block copolymer according to the present invention is an at least-tri-block copolymer comprising at least two Y blocks each containing at least one cyclic conjugated diene monomer unit A, and at least one Z block comprised mainly of chain conjugated diene monomer units B.

Another preferred form of the cyclic conjugated diene block copolymer according to the present invention is a diblock copolymer comprising one Y block containing at least one cyclic conjugated diene monomer unit A, and one

Z block comprised mainly of chain conjugated diene monomer units B.

Further, as mentioned above, in another aspect of the present invention, there is provided a cyclic conjugated diene copolymer composition comprising ($\alpha$) the above-mentioned at least-tri-block copolymer and ($\beta$) the above-mentioned diblock copolymer.

With respect to the cyclic conjugated diene block copolymer composition of the present invention which comprises block copolymers ($\alpha$) and ($\beta$), it has surprisingly been found that the Y block and the Z block, which are contained in each of component block copolymers ($\alpha$) and ($\beta$), form a microdomain structure.

In the present invention, the Y block forms an agglomeration phase (i.e., a hard segment) and the Z block forms an elastomer phase (i.e., a soft segment).

As mentioned above, in the cyclic conjugated diene block copolymer composition of the present invention, the cyclic conjugated diene block copolymer usable as component ($\alpha$) is an at least-tri-block copolymer comprising a main chain which is comprised of at least two Y blocks and at least one Z block.

Examples of cyclic conjugated diene block copolymers usable as component ($\alpha$), which is an at least-tri-block copolymer comprising at least two polymer blocks (Y blocks) each comprised mainly of cyclic conjugated diene monomer units or a derivative thereof, and at least one polymer block (Z block) comprised mainly of chain conjugated diene monomers or a derivative thereof, include linear block copolymers respectively represented by the formulae (IV) and radial block copolymers respectively represented by the formulae (V):

$$(Y\text{-}Z)_r,\ Y\text{-}(Z\text{-}Y)_q,\ \text{and}\ Z\text{-}(Y\text{-}Z)_r \qquad (IV)$$

wherein q is an integer of 1 or more, and each r is an integer of 2 or more; and

$$[(Z\text{-}Y)_q]_rX,\ [(Y\text{-}Z)_q]_rX,$$

$$[(Z\text{-}Y)_q\text{-}Z]_rX,\ \text{and}\ [(Y\text{-}Z)_q\text{-}Y]_rX \qquad (V)$$

wherein each q and each r are as defined above; and each X independently represents a residue of a multifunctional coupling agent, such as dimethyldichlorosilane, methylene chloride, silicon tetrachloride, tin tetrachloride or an epoxidized soybean oil, or a residue of a polymerization catalyst comprised of a binuclear or multinuclear complex of an organometallic compound containing a metal belonging to Group IA of the Periodic Table with a complexing agent.

Further, the cyclic conjugated diene block copolymer usable as component ($\alpha$) may be of other configuration than represented by formulae (IV) and (V) above. For example, the block copolymer may be of an asymmetric radial block, a graft block, a star block and a comb block configuration. Particularly, for obtaining a cyclic conjugated diene block copolymer composition which can be used as a thermoplastic elastomer or a special high impact, transparent resin, it is necessary that the block copolymer as component ($\alpha$) comprise at least two Y blocks, as in the case of block copolymers represented by formulae (IV) and (V) above.

As long as the cyclic conjugated diene block copolymer composition comprises, as component ($\alpha$), such a block copolymer as mentioned above, the copolymer composition may further comprise a triblock copolymer represented by the formula Z-Y-Z, i.e., a triblock copolymer represented by the formula $Z\text{-}(Y\text{-}Z)_r$ of (IV) above in which r is 1.

With respect to the content of such a copolymer in the block copolymer composition which copolymer does not function as a physical crosslinking site (such as the above-mentioned triblock copolymer represented by the formula Z-Y-Z), it may be appropriately selected depending on the intended use of the block copolymer composition. However, from the viewpoint of achieving satisfactory mechanical properties, it is preferred that the content of such a copolymer be 70 wt% or less, based on the weight of the copolymer composition.

A radial block copolymer represented by the formula $[(Y\text{-}Z)_q]_rX$, $[(Y\text{-}Z)_q\text{-}Y]_rX$, or $[(Z\text{-}Y)_q\text{-}Z]_rX$, wherein q is an integer of 1 or more, and r is an integer of 2 or more, can be used as a thermoplastic elastomer. On the other hand, a radial block copolymer represented by the formula $[(Z\text{-}Y)_q]_rX$ can be used as an elastomer, only when q is an integer of 2 or more (and r is an integer of 2 or more).

In the cyclic conjugated diene block copolymer composition of the present invention, the respective radial block copolymers of the above formulae need not have the same structural composition. For example, the radial block copolymer represented by the formula $[(Y\text{-}Z)_q]_rX$ of (V) above may be present in the form of a mixture of block copolymers respectively represented by the formulae $(Y\text{-}Z)_4X$, $(Y\text{-}Z)_3X$, $(Y\text{-}Z)_2X$ and (Y-Z),
wherein the ratios of the respective block copolymers, are appropriately chosen.

In the cyclic conjugated diene block copolymer composition of the present invention, the cyclic conjugated diene block copolymer as component ($\alpha$) is a block copolymer such that at least a part of a main chain of the copolymer

is comprised of at least two Y blocks and at least one Z block. Therefore, the block copolymer is not necessarily comprised only of Y blocks and Z blocks.

For example, in the present invention, a cyclic conjugated diene block copolymer usable as component (α) may have a structure represented by Y-Z-U-Y, Y-U-Z-Y, or Z-Y-U-Y, wherein the U block is comprised of at least one monomer unit selected from the class consisting of monomer units copolymerizable with the Y and Z blocks, and a derivative thereof. Examples of monomer units copolymerizable with the Y and Z blocks include vinyl aromatic monomers, such as styrene, α-methylstyrene, o-methylstyrene, p-methylstyrene, p-tert-butylstyrene, 2,4-dimethylstyrene, divinylbenzene, vinylnaphthalene, diphenylethylene and vinylpyridine; polar vinyl monomers, such as methyl methacrylate, methyl acrylate, acrylonitrile, methyl vinyl ketone and methyl α-cyanoacrylate; polar monomers, such as ethylene oxide, propylene oxide, a lactone, a lactam and a cyclic siloxane; ethylene monomer; and α-olefin monomers. Further, a cyclic conjugated diene monomer or a derivative thereof and/or a chain conjugated diene monomer, such as 1,3-butadiene, isoprene, 2,3-dimethyl-1,3-butadiene, 1,3-pentadiene, or 1,3-hexadiene, can be copolymerized into the U block. Alternatively, the block copolymer may comprise a plurality of different polymer blocks, e.g., a U block, a V block and a W block, wherein the monomer units of each of the V block and the W block are selected from the same monomer units as used in the U block but arranged in a different configuration from that of the U block. The configuration of such a block copolymer as component (α) comprising three or more polymer blocks is not limited to a linear block configuration which is the case of the formulae shown above. For example, the block copolymer may be of a radial block, a star block or a comb block configuration.

The content of component (α) in the cyclic conjugated diene block copolymer composition of the present invention may be appropriately selected within the range of from 5 to 95 wt%, preferably from 15 to 85 wt%. When the content of component (α) is less than 5 wt%, it is impossible to obtain a copolymer composition having satisfactory mechanical properties (such as tensile strength at break and tensile elongation at break) for use as a thermoplastic elastomer or a special high impact, transparent resin. On the other hand, when the content of component (α) is more than 95 wt%, although the copolymer composition exhibits excellent performances, especially in respect of mechanical properties, the copolymer composition is likely to have poor processability and poor flowability.

In the cyclic conjugated diene block copolymer composition of the present invention, the cyclic conjugated diene block copolymer as component (β) is a diblock copolymer comprising one Y block comprised mainly of monomer units derived from at least one cyclic conjugated diene monomer or a derivative thereof, and one Z block comprised mainly of monomer units derived from at least one chain conjugated diene monomer or a derivative thereof. That is, the cyclic conjugated diene block copolymer as component (β) is a Y-Z diblock copolymer.

It is preferred that the Y-Z diblock copolymer as component (β) have a Y/Z weight ratio of 3/97 to 97/3. Further, the Y/Z weight ratio in component (β) may or may not be the same as that in the block copolymer as component (α).

The content of the Y-Z diblock copolymer as component (β) in the cyclic conjugated diene block copolymer composition may be appropriately selected within the range of from 95 to 5 wt%, preferably from 85 to 15 wt%. When the content of the Y-Z diblock copolymer as component (β) is less than 5 wt%, it is likely that the processability and flowability of the copolymer composition become poor. On the other hand, when the content of the Y-Z diblock copolymer as component (β) is more than 95 wt%, although the processability of the copolymer composition is greatly improved, it is impossible to obtain a copolymer composition having satisfactory mechanical properties (such as tensile strength at break and tensile elongation at break) for the copolymer composition to be used as a thermoplastic elastomer or a special high impact, transparent resin.

In the cyclic conjugated diene block copolymer composition of the present invention, the molecular weight of each of components (α) and (β) may be appropriately controlled depending on the intended use of the composition. However, the number average molecular weight of each of components (α) and (β) in terms of the value obtained using a calibration curve of a standard polystyrene is generally within the range of from 25,000 to 1,000,000, preferably from 25,000 to 500,000, and more preferably from 25,000 to 400,000.

The molecular weight distribution (in terms of the value of Mw/Mn, wherein Mw and Mn indicate the weight average molecular weight and the number average molecular weight, respectively) of each of components (α) and (β) is within the range of from 1.01 to 10, preferably from 1.05 to 7, and more preferably from 1.1 to 5.

The molecular weight of component (α) and that of component (β) may be appropriately selected within the above-mentioned ranges, but generally, the molecular weight of each component is controlled so that the molecular weight of component (α) is larger than that of component (β).

In the cyclic conjugated diene block copolymer composition of the present invention, the molecular weight of the Y block contained in each of components (α) and (β), which is comprised partially or entirely of monomer units derived from at least one cyclic conjugated diene monomer or a derivative thereof, may be appropriately controlled depending on the intended use of the composition. Generally, it is preferred that the Y block be comprised of a contiguous arrangement of 20 or more monomer units, more preferably 30 or more monomer units, and most preferably 50 or more monomer units. The respective lengths of at least two Y blocks in component (α) may be the same or different. For example, when component (α) is a triblock copolymer having a structure of Y-Z-Y, the respective Y blocks

may have different lengths, so as to form an asymmetric block copolymer.

In the cyclic conjugated diene block copolymer composition of the present invention, the content of the Y block (i.e., a polymer block comprised mainly of monomer units derived from at least one cyclic conjugated diene monomer or a derivative thereof) in each of components (α) and (β) may be appropriately selected according to the intended use of the composition. However, the content of the Y block in each of components (α) and (β) is generally selected within the range of from 3 to 97 wt%, preferably from 10 to 85 wt%, based on the weight of the composition.

Particularly, for obtaining the block copolymer composition which can be used as a thermoplastic elastomer, it is preferred that the content of the Y block be within the range of from 10 to 50 wt%, based on the weight of the copolymer composition. For obtaining the block copolymer composition which can be used as a special high impact, transparent resin, it is preferred that the content of the Y block be within the range of from 65 to 90 wt%, based on the weight of the copolymer composition.

In the present invention, if desired, the Y block contained in each of components (α) and (β) may further comprise a monomer unit derived from at least one comonomer copolymerizable with the cyclic conjugated diene monomer. Generally, the Y block may contain the monomer unit derived from at least one comonomer copolymerizable with the cyclic conjugated diene monomer in an amount of up to 80 wt%, preferably up to 50 wt%, based on the weight of the Y block.

Preferable examples of cyclic conjugated diene monomers to be used for forming the Y block include those which are mentioned above as examples of the cyclic conjugated diene monomers to be used in the cyclic conjugated diene polymer of the present invention.

When the Y block comprises at least one monomer unit selected from the class consisting of cyclic conjugated diene monomer units and a comonomer unit derived from at least one comonomer copolymerizable with the cyclic conjugated diene monomer, the Y block may be of any of conventional configurations, for example, a random, a block, an alternating or a taper configuration.

Preferable examples of comonomers which can be used for introducing a comonomer unit into the Y block include styrene and α-methylstyrene.

On the other hand, examples of chain conjugated diene monomers to be used for forming the Z block contained in each of components (α) and (β) of the cyclic conjugated diene block copolymer composition of the present invention include 1,3-butadiene, isoprene, 2,3-dimethyl-1,3-butadiene, 1,3-pentadiene, and 1,3-hexadiene. Among these, 1,3-butadiene and isoprene are especially preferred.

In the present invention, if desired, the Z block comprised mainly of chain conjugated diene monomer units may further comprise a monomer unit derived from at least one comonomer copolymerizable with the chain conjugated diene monomer.

When the Z block comprises chain conjugated diene monomer units and a monomer derived from at least one comonomer copolymerizable with the chain conjugated diene monomer, the Z block may be of any of conventional configurations, for example, a random, a block, an alternating or a taper configuration.

The content of the comonomer unit in the Z block is generally up to 50 wt%, preferably up to 30 wt%.

Preferable examples of comonomers copolymerizable with the chain conjugated diene monomer include styrene and α-methylstyrene.

When 1,3-butadiene is used as a chain conjugated diene monomer for forming the Z block, a polybutadiene block is formed as the Z block. With respect to the microstructure of the polybutadiene block, cis- and trans-1,4-bonds and a vinyl-1,2-bond are present in the polybutadiene block. The vinyl-1,2-bond content is generally controlled within the range of from 10 to 90 mol%.

As mentioned above, the Z block is a soft segment (elastomer phase). Therefore, for obtaining a cyclic conjugated diene block copolymer composition which can be used as a thermoplastic elastomer, it is preferred that the glass transition temperature (Tg) of the Z block be lower than room temperature. When the Z block contains 1,2-bonds in too large an amount, the Tg of the Z block becomes undesirably high, thereby lowering the properties of the elastomer under low temperature conditions. Therefore, it is preferred that the 1,2-bond content be within the range of from 10 to 80 mol%.

The method for producing the cyclic conjugated diene block copolymer composition of the present invention can be appropriately selected from the following methods: a method comprising melt-kneading or solution-mixing components (α) and (β) which have been separately polymerized; a method comprising successively feeding a catalyst and a monomer to a polymer solution; a method comprising preparing a Y-Z diblock living polymer, and partially coupling the polymer; and a combination thereof.

Among the above methods, from the economical point of view, it is most preferred to employ the method comprising preparing a Y-Z diblock living polymer by living anionic polymerization, and coupling a part of active terminals of the living polymer.

In this method, by changing the equivalent ratio of the concentration of the active terminals to the functional groups of the coupling agent to control the ratio of coupling, a cyclic conjugated diene block copolymer comprising

different types of polymer blocks can be obtained.

The cyclic conjugated diene block copolymer composition of the present invention may contain a cyclic conjugated diene homopolymer and/or a chain conjugated diene homopolymer.

Such a cyclic conjugated diene homopolymer and/or a chain conjugated diene homopolymer is occasionally incorporated in compatibility with each of the Y block and Z block contained in each of components (α) and (β) (i.e., the cyclic conjugated diene block copolymers) to thereby function as a plasticizer. The content of the cyclic conjugated diene homopolymer and/or the chain conjugated diene homopolymer in the copolymer composition is preferably up to 40 wt%, more preferably up to 20 wt%, most preferably up to 10 wt%.

Preferred examples of cyclic conjugated diene block copolymer compositions of the present invention include a copolymer composition comprising in combination the following components (α) and (β):

(α) Y-Z-Y or $[(Y\text{-}Z)_q]_rX$ copolymer wherein q is an integer of 1 or more; r is an integer of 2 or more; and X represents a residue of a multifunctional coupling agent, such as dimethyldichlorosilane, methylene chloride, silicon tetrachloride, tin tetrachloride or an epoxidized soybean oil, or a residue of a polymerization catalyst which is a binuclear or multinuclear complex of an organometallic compound containing a metal belonging to Group IA of the Periodic Table with a complexing agent; and

(β) Y-Z diblock copolymer, wherein components (α) and (β) are, respectively, present in an amount of 5 to 95 wt% and in an amount of 95 to 5 wt%, based on the total weight of components (α) and (β).

In still another aspect of the present invention, there is provided a polymerization catalyst having an anionic polymerization activity, particularly a living anionic polymerization activity.

The polymerization catalyst of the present invention is a complex comprising an organometallic compound containing a metal belonging to Group IA of the Periodic Table (Group IA metal) with a complexing agent. This complex as a polymerization active species has a binuclear or multinuclear complex structure.

Heretofore, various types of catalysts having a living anionic polymerization activity have been proposed. For example, organometallic compounds containing a Group IA metal or complexes of the organometallic compounds containing a Group IA metal with complexing agents have already been widely used as living anionic polymerization catalysts.

Among these complexes of organometallic compounds containing a Group IA metal, particularly with respect to a complex of an alkyllithium (R-Li) with TMEDA (tetramethylethylenediamine) as a complexing agent, extensive studies have been made.

N.Y. Acad. Sci. 27, 741 (1965) teaches that such a complex as the polymerization active species has a mononuclear alkyllithium - TMEDA complex structure represented by the formula (VI) shown below, which is characterized by containing one metal atom in one complex.

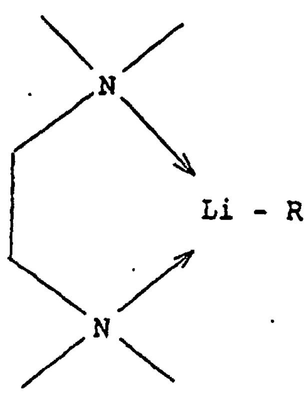

(VI)

wherein R represents a $C_1$-$C_{20}$ alkyl group.

In the prior art, there is a teaching such that, when TMEDA is added to a system of associated molecules of alkyllithium, the TMEDA reacts with the alkyllithium to form a complex, thereby destroying the association of the alkyllithium molecules, so that a mononuclear active species is formed, leading to an improvement in polymerization activity of the alkyllithium type catalyst.

Accordingly, it is suggested that, when a conventional polymerization catalyst is used, a single metal cation is present at the respective terminals of polymeric molecular chains growing in arbitrary directions, and the terminals each containing a single metal cation are individually reached by a monomer from the arbitrary directions, so that a

polymerization reaction proceeds.

As viewed from a different angle, this suggests that when a conventional polymerization catalyst is used, the molecular structure of a polymer chain is influenced by external factors, such as a reaction temperature, so that it becomes extremely difficult to control the molecular structure of a polymer chain.

That is, conventional living anionic polymerization catalysts do not have a satisfactory polymerization activity for use in a commercial scale practice of polymerization of monomers, which have a large steric hindrance and therefore are difficult to polymerize, such as cyclic conjugated diene monomers. Further, any of the conventional techniques does not teach or suggest that when such a conventional anionic polymerization catalyst is used, the structure of the polymeric molecular chain can be satisfactorily controlled.

The present inventors have found a surprising fact which is contrary to the conventional recognition of a living anionic polymerization catalyst. That is, the present inventors have surprisingly, unexpectedly found that, with respect to a complex of an organometallic compound containing a Group IA metal with a complexing agent, a complex structure capable of well self-stabilizing an association of the molecules of the organometallic compound containing a Group IA metal is most effective for providing an excellent polymerization active species. Based on this finding, the polymerization catalyst of the present invention has been successfully developed.

The polymerization catalyst of the present invention is a complex of an organometallic compound containing a Group IA metal with a complexing agent, wherein the polymerization active species of the complex has a binuclear or multinuclear complex structure.

More specifically, the polymerization catalyst of the present invention is a binuclear or multinuclear complex of an organometallic compound containing a Group IA metal, which complex has a complex structure capable of self-stabilizing an association of the molecules of the organometallic compound and self-maintaining the complex structure even in the presence of monomers.

In the present invention, the term "binuclear complex" means a complex of an organometallic compound containing a Group IA metal, wherein two atoms of the Group IA metal are associated together to form an association unit. The term "multinuclear complex" means a complex of an organometallic compound containing a Group IA metal, wherein three or more atoms of the Group IA metal are associated together to form an association unit.

In the present invention, with respect to the multinuclear complex, as long as three or more atoms of the Group IA metal are associated together, the association form of the atoms may be varied depending on the respective types of the organometallic compound and the complexing agent, and the intended use of the complex, and a most stable association form can be appropriately selected.

In the present invention, it is preferred that the Group IA metal in the multinuclear complex be present in the form of an association of 3 to 20 metal atoms, more preferably 3 to 10 metal atoms. From a commercial point of view, it is most preferred that the Group IA metal in the multinuclear complex be present in the form of an association of 4 to 6 metal atoms.

The polymerization catalyst of the present invention has not only a satisfactory polymerization activity for use in a commercial scale practice of polymerization of monomers, which have a large steric hindrance and therefore are difficult to polymerize, such as a cyclic conjugated diene monomer, but also the capability to self-maintain the complex structure thereof even in the presence of monomers to be polymerized. The polymerization reaction using the polymerization catalyst of the present invention is a living anionic polymerization reaction. Despite this, however, the reaction proceeds like a coordination polymerization, that is, by virtue of the specific structure of the catalyst of the present invention, a monomer to be polymerized is inserted to the complex as a polymerization active species as in a coordination polymerization. Therefore, even when the catalyst of the present invention is used for polymerization of other known monomers which can be polymerized by anionic polymerization, the molecular structure of the resultant polymer can be satisfactorily controlled.

Examples of Group IA metals, which can be used in the polymerization catalyst of the present invention, include lithium, sodium, potassium, rubidium, cesium and francium. Of these, lithium, sodium and potassium are preferred, and lithium is especially preferred.

The complex used as a polymerization catalyst of the present invention is a complex of an organometallic compound containing a Group IA metal. Preferable examples of such complex include a binuclear or multinuclear complex of an organolithium compound, an organosodium compound or an organopotassium compound. Of these, a binuclear or multinuclear complex compound of an organolithium compound is most preferred.

The organolithium compound, which can be preferably used in the polymerization catalyst of the present invention, is a compound containing at least one lithium atom bonded to an organic molecule containing at least one carbon atom or to an organic polymer. Examples of such organic molecule groups include a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, and a $C_4$-$C_{20}$ cyclodienyl group. Examples of organolithium compounds usable in the polymerization catalyst of the present invention include methyllithium, ethyllithium, n-propyllithium, iso-propyllithium, n-butyllithium, sec-butyllithium, tert-butyllithium, pentyllithium, hexyllithium, aryllithium, cyclohexyllithium, phenyllithium, hexamethylenedilithium, cyclopentadienyllithium, indenyllithium, butadienyldilithium, and isoprenyldilithium.

Representative examples of such organolithium compounds include methyllithium, ethyllithium, n-butyllithium, sec-butyllithium, tert-butyllithium, and cyclohexyllithium. Of these, n-butyllithium is most preferred from a commercial point of view.

In the present invention, each of the above-mentioned organometallic compounds containing a Group IA metal can be used individually or, if desired, in combination.

With respect to the type of a compound (a complexing agent) which forms a polymerization catalyst of the present invention in cooperation with the organometallic compound containing a Group IA metal, it is necessary that such a compound can form a stable association between organometallic compounds containing a Group IA metal, so as to form a binuclear or multinuclear complex capable of self-maintaining the structure thereof even in the presence of monomers to be polymerized.

More specifically, as the complexing agent, an organic compound can be used which is capable of donating an electron to the Group IA metal of an organometallic compound containing a Group IA metal so that a stable association is formed between organometallic compounds containing a Group IA metal. Examples of such an organic compound include an amine.

That is, the complexing agent to be used with an organometallic compound containing a Group IA metal for forming a binuclear or multinuclear complex be an amine.

Specifically, in the polymerization catalyst of the present invention, it is especially preferred that a binuclear or multinuclear complex be formed from a Group IA metal-containing organometallic compound and a complexing agent, such as an amine, and it is most preferred that a binuclear or multinuclear complex be formed from an organolithium compound and an amine.

Examples of amines which are most preferably used as the complexing agent for forming the polymerization catalyst of the present invention include an organic compound or organic polymer containing at least one $R^1R^{2'}N$-group (wherein each of $R^1$ and $R^{2'}$ independently represents a hydrogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group, or a 5 to 10-membered heterocyclic group having at least one nitrogen, oxygen or sulfur atom as a heteroatom), which is a polar group having a non-covalent electron pair capable of coordinating with the organometallic compound containing a Group IA metal.

Among these amines, a tert-amine is most preferred.

Examples of tert-amines include trimethylamine, triethylamine, dimethylaniline, diethylaniline, tetramethyldiaminomethane, tetramethylethylenediamine, tetramethyl-1,3-propanediamine, tetramethyl-1,3-butanediamine, tetramethyl-1,4-butanediamine, tetramethyl-1,6-hexanediamine, tetramethyl-1,4-phenylenediamine, tetramethyl-1,8-naphthalenediamine, tetramethylbenzidine, tetraethylethylenediamine, tetraethyl-1,3-propanediamine, tetramethyldiethylenetriamine, pentamethyldiethylenetriamine, diazabicyclo-[2,2,2]octane, 1,5-diazabicyclo[4,3,0]-5-nonene, 1,8-diazabicyclo-[5,4,0]-7-undecene, 1,4,8,11-tetramethyl-1,4,8,11-tetraazacyclotetradecane, tetrakis(dimethylamino) ethylene, tetraethyl-2-butene-1,4-diamine, 2,2'-bipyridyl, 1,10-phenanthroline, hexamethylphosphoric triamide.

Among these, tetraethylethylenediamine (TEEDA), tetramethylethylenediamine (TMEDA), tetramethyldiethylenetriamine (TMEDTA), pentamethyldiethylenetriamine (PMDT), diazabicyclo[2,2,2]octane (DABACO), 2,2'-bipyridyl, 1,10-phenarithroline, and hexamethylphosphoric triamide (HMPA) are more preferred.

Of these, tetramethylethylenediamine (TMEDA) is most preferred from a commercial point of view.

The above-mentioned amines may be used individually or, if desired, in combination. Further, these amines may be used in combination with other types of complexing agents. In combining the amines and other types of complexing agents, an appropriate combination is selected so that an association between the molecules of organometallic compounds containing a Group IA metal can be stabilized.

With respect to a method of synthesizing a binuclear or multinuclear complex which is the most preferable polymerization catalyst of the present invention, the complex is obtained by the reaction of an organometallic compound containing a Group IA metal with an amine. The synthesis can be conducted by conventional techniques.

Examples of such conventional techniques include a method of dissolving the organometallic compound in an organic solvent in an atmosphere of an inert gas, and adding thereto a solution of an amine in an organic solvent; and a method of dissolving an amine in an organic solvent in an atmosphere of an inert gas, and adding thereto a solution of an organometallic compound. From these methods, a preferable method can be appropriately selected.

In the preparation of a binuclear or multinuclear complex from a Group IA metal-containing organometallic compound and an amine, which complex is the most preferable polymerization catalyst of the present invention, it is preferred to employ the following molar ratio with respect to the amine and the Group IA metal contained in the organometallic compound. The molar ratio is preferably:

$$M_1/M_2 = 60/1 \text{ to } 1/60,$$

more preferably:

$$M_1/M_2 = 50/1 \text{ to } 1/50,$$

still more preferably:

$$M_1/M_2 = 30/1 \text{ to } 1/30,$$

most preferably:

$$M_1/M_2 = 20/1 \text{ to } 1/20.$$

wherein $M_1$ is the molar amount of the amine, and $M_2$ is the molar amount of the Group IA metal contained in the organometallic compound.
When the above mentioned molar ratio $M_1/M_2$ is within the range as defined above, a stable binuclear or multinuclear complex can be obtained, which can be advantageously used for producing a polymer or a copolymer in high yield.

When the molar ratio $M_1/M_2$ is outside the range as defined above, various disadvantages are likely to be caused in that the production process for the complex becomes costly, and that the complex becomes unstable, so that concurrently with the polymerization reaction, an undesirable side reaction, such as a transfer reaction or a reaction of elimination of a hydride of the Group IA metal, is likely to occur.

For self-maintaining the stable complex structure of the polymerization catalyst, it is most preferred that a polymerization catalyst of the present invention, which comprises, as a polymerization active species, a binuclear or multinuclear complex of an organometallic compound containing a Group IA metal, be prepared prior to the initiation of the polymerization reaction; namely, before cyclic conjugated diene monomers are added to the reaction system.

When the complexing agent used in preparing the polymerization catalyst of the present invention is a tert-amine, a preferred form of the binuclear or multinuclear complex has a structure which can be represented, for example, by the following formula (VII):

$$[(G)_g \cdot (J)_j]_k \qquad \text{(VII)}$$

wherein G represents at least one type of organometallic compound containing a Group IA metal; J represents at least one type of tert-amine; k is an integer of 1 or more; and g is an integer of 2 or more and j is an integer of 1 or more when k is 1, and each of g and j is an integer of 1 or more when k is an integer of 2 or more.

Representative examples of polymerization catalysts of the present invention include a complex comprising an amine and an organolithium compound, in which the molar ratio of the amine to the organolithium compound is 1/4. More specific examples of polymerization catalysts of the present invention include a complex comprising an amine and an organolithium compound selected from the group consisting of methyllithium, ethyllithium and n-butyllithium, in which the molar ratio of the amine to the organolithium compound is 1/4.

From a commercial point of view, it is most preferred that the polymerization catalyst of the present invention be a multinuclear complex comprising TMEDA and n-butyllithium (n-BuLi), in which the molar ratio of TMEDA to n-BuLi is 1/4.

The polymerization catalyst of the present invention can be used not only for polymerization of cyclic conjugated diene monomers, but also for polymerization of other monomers which can be polymerized by anionic polymerization.

Examples of other monomers than the cyclic conjugated diene monomers include chain conjugated diene monomers, such as 1,3-butadiene, isoprene, 2,3-dimethyl-1,3-butadiene, 1,3-pentadiene, and 1,3-hexadiene; vinyl aromatic monomers, such as styrene, α-methylstyrene, o-methylstyrene, p-methylstyrene, p-tert-butylstyrene, 2,4-dimethylstyrene, divinylbenzene, vinylnaphthalene, diphenylethylene, and vinylpyridine; polar vinyl monomers, such as methyl methacrylate, methyl acrylate, acrylonitrile, methyl vinyl ketone, and methyl α-cyanoacrylate; ethylene; and α-olefin monomers. The above-mentioned monomers may be used individually or, if desired, in combination.

With respect to the configuration of a polymer obtained using the polymerization catalyst of the present invention, it may be appropriately selected. Examples of polymer configurations include a homopolymer; a block copolymer, such as a diblock, a triblock, a tetrablock, a multiblock, a radial block, a star block, or a comb block copolymer;

and a taper copolymers.

Further, examples of polymerization methods include a gaseous phase polymerization, a bulk polymerization, or a solution polymerization. Further, the polymerization reactions can be conducted in various manners, such as a batchwise, a semi-batchwise or a continuous manner.

For performing the polymerization reaction, the polymerization catalyst of the present invention may be used individually or in combination with other types of polymerization catalyst. Further, if desired, the polymerization catalyst of the present invention may be supported by an inorganic compound, such as silica or a zeolite.

In a further aspect of the present invention, there is provided a preferred method for obtaining the novel cyclic conjugated diene polymer of the present invention.

With respect to the method for producing the novel cyclic conjugated diene polymer of the present invention, and any conventional method can be used as long as a polymer satisfying the requirements of the present invention can be obtained. However, a preferable polymerization method for obtaining the cyclic conjugated diene polymer of the present invention consists in using, as a polymerization catalyst, a complex of an organometallic compound containing a Group IA metal with a complexing agent.

More specifically, in the preferable polymerization method of the present invention, a binuclear or multinuclear complex of an organometallic compound containing a Group IA metal with a complexing agent is used as a polymerization catalyst.

In the most preferable polymerization method of the present invention for obtaining the cyclic conjugated diene polymer, a binuclear or multinuclear complex of an organometallic compound containing a Group IA metal with an amine (a complexing agent), is used.

The polymerization method of the present invention for producing the cyclic conjugated diene polymer is advantageous in that it has become possible to polymerize or copolymerize a cyclic conjugated diene monomer, which exhibits a large steric hindrance, so that it has been recognized to be difficult to polymerize by conventional techniques, into a homopolymer or copolymer having a high degree of polymerization.

Particularly, in the polymerization method of the present invention, by using a specific complex of a Group IA metal, it becomes possible to suppress the occurrence of unfavorable side reactions at polymer terminals (which side reactions are caused by cyclic conjugated diene monomers themselves), such as a transfer reaction caused by the abstraction of a Group IA metal cation present in the polymer terminal, and a reaction of elimination of lithium hydride, so that it has for the first time become possible to polymerize or copolymerize a cyclic conjugated diene monomer into a homopolymer or copolymer having a high degree of polymerization.

Examples of metals belonging to Group IA of the Periodic Table, which can be used in a polymerization catalyst to be used in the polymerization method of the present invention, include lithium, sodium, potassium, rubidium, cesium, and francium. Of these, lithium, sodium and potassium are preferred, and lithium is most preferred. These metals may be used individually or, if desired, in combination.

Preferable examples of complexes which can be used in the polymerization method of the present invention include complexes of organometallic compounds containing a Group IA metal, such as complexes of an organolithium compound, an organosodium compound, or an organopotassium compound. As such a complex, a binuclear or multinuclear complex of an organolithium compound is preferred.

The complex which can be most preferably used in the polymerization method of the present invention is the polymerization catalyst of the present invention, i.e., a binuclear or multinuclear complex of an organometallic compound containing a Group IA metal with a complexing agent comprising an amine.

With respect to the type and amount of the complexing agent to be used for forming a complex with an organometallic compound containing a Group IA metal, one or more types of complexing agents can be appropriately selected depending on the reaction conditions, so as for the cation of the Group IA metal of the organometallic compound to be most effectively protected.

That is, in the polymerization method of the present invention for producing the cyclic conjugated diene polymer, it is preferred to use a polymerization catalyst comprised of an at least-binuclear complex formed from a Group IA metal-containing organometallic compound and an amine, and it is especially preferred to use a polymerization catalyst a binuclear or multinuclear complex formed from an organolithium compound and a complexing agent comprising an amine.

The organolithium compound, which can be preferably used in the polymerization method of the present invention, is a known compound containing at least one lithium atom which is bonded to an organic molecule containing at least one carbon atom or to an organic polymer. Examples of organolithium compounds include methyllithium, ethyllithium, n-propyllithium, iso-propyllithium, n-butyllithium, sec-butyllithium, tert-butyllithium, pentyllithium, hexyllithium, allyllithium, cyclohexyllithium, phenyllithium, hexamethylenedilithium, cyclopentadienyllithium, indenyllithium, butadienyldilithium, and isoprenyldilithium. Further, known oligomeric or polymeric organolithium compounds, each containing a lithium atom in a polymeric molecular chain thereof, such as polybutadienyllithium, polyisoprenyllithium and polystyryllithium, can also be used.

These organolithium compounds may be used individually or, if desired, in combination.

Especially preferable examples of organolithium compounds include methyllithium, ethyllithium, n-butyllithium, sec-butyllithium, tert-butyllithium, and cyclohexyllithium.

Further, from a commercial point of view, it is most preferable to use n-butyllithium as the organolithium compound.

Examples of amines, which can be used as the most preferable complexing agent to be used for forming a complex with an organometallic compound containing a Group IA metal, include the same amines as mentioned above in connection with the preparation of the polymerization catalyst of the present invention.

Specifically, examples of such amines include an organic compound or an organic polymer, which contains at least one $R^1R^{2'}N$- group (wherein each of $R^1$ and $R^{2'}$ independently represents a $C_1$-$C_{20}$ alkyl group, a $C_5$-$C_{20}$ aryl group, or a hydrogen atom) which is a polar group having a non-covalent electron pair capable of coordinating with the organometallic compound containing a Group IA metal.

Among these amines, a tert-amine is most preferred.

Preferable examples of tertiary amines include trimethylamine, triethylamine, tetramethyldiaminomethane, tetramethylethylenediamine, tetramethyl-1,3-propanediamine, tetramethyl-1,3-butanediamine, tetramethyl-1,4-butanediamine, tetramethyl-1,6-hexanediamine, tetramethyl-1,4-phenylenediamine, tetramethyl-1,8-naphthalenediamine, tetramethylbenzidine, tetraethylethylenediamine, tetraethyl-1,3-propanediamine, tetramethyldiethylenetriamine, pentamethyldiethylenetriamine, diazabicyclo[2,2,2]octane, 1,4,8,11-tetramethyl-1,4,8,11-tetraazacyclotetradecane, tetrakis(dimethylamino)ethylene, tetraethyl-2-butene-1,4-diamine, 2,2'-bipyridyl, 1,10-phenanthroline and hexamethylphosphoric triamide.

Among these, tetraethylethylenediamine (TEEDA), tetramethylethylenediamine (TMEDA), tetramethyldiethylenetriamine (TMEDTA), pentamethyldiethylenetriamine (PMDT), 2,2'-bipyridyl, 1,10-phenanthroline, diazabicyclo [2,2,2]octane (DABACO) and hexamethylphosphorictriamide (HMPA) are especially preferred.

Of these, tetramethylethylenediamine (TMEDA) is most preferred from a commercial point of view.

These amines are appropriately selected depending on the intended use of the catalyst, and they can be used individually or, if desired, in combination.

With respect to a method for synthesizing a complex of a Group IA metal-containing organometallic compound with a complexing agent, which complex is most preferred among the polymerization catalysts usable in the polymerization method of the present invention, there can be used an appropriate conventional technique, which is selected depending on the properties of the organometallic compound and a complexing agent.

Examples of such conventional techniques include a method of dissolving an organometallic compound in an organic solvent in an atmosphere of an inert gas, and adding thereto a solution of a complexing agent in an organic solvent; a method of dissolving a complexing agent in an organic solvent in an atmosphere of an inert gas, and adding thereto a solution of an organometallic compound; and a method of simultaneously adding an organometallic compound and a complexing agent to an organic solvent in an atmosphere of an inert gas.

In the preparation of a complex of a Group IA metal-containing organometallic compound with a complexing agent, which complex is most preferred among the polymerization catalysts usable in the polymerization method of the present invention, it is preferred to employ the following molar ratio of the complexing agent to the Group IA metal contained in the organometallic compound. The molar ratio is generally:

$$M_1/M_2 = 1000/1 \text{ to } 1/1000,$$

preferably:

$$M_1/M_2 = 100/1 \text{ to } 1/100,$$

wherein $M_1$ is the molar amount of the complexing agent, and $M_2$ is the molar amount of the Group IA metal contained in the organometallic compound.

Especially when the complex is an at least-bi-nuclear complex, the molar ratio is preferably:

$$M_1/M_2 = 60/1 \text{ to } 1/60,$$

more preferably:

$$M_1/M_2 = 50/1 \text{ to } 1/50,$$

still more preferably:

$$M_1/M_2 = 30/1 \text{ to } 1/30,$$

most preferably:

$$M_1/M_2 = 20/1 \text{ to } 1/20,$$

wherein $M_1$ and $M_2$ are as defined above.

The catalyst satisfying the above-mentioned molar ratio $M_1/M_2$ can be advantageously used for producing a polymer or a copolymer in high yield.

When the molar ratio $M_1/M_2$ is outside the range as defined above, various disadvantages are likely to be caused in that the production process for the complex becomes costly, and that the complex becomes unstable, so that concurrently with the polymerization reaction, an undesirable side reaction, such as a transfer reaction or a reaction of elimination of a hydride of the Group IA metal is likely to occur.

However, for the purpose of improving a flowability of the polymer, the above-mentioned catalyst may be used in combination with a Group IA metal-containing organometallic compound which is not complexed with a complexing agent.

The polymerization method of the present invention for producing a cyclic conjugated diene polymer can be conducted by bulk polymerization or solution polymerization in the presence of a polymerization catalyst, namely, a complex of a Group IA metal-containing organometallic compound with a complexing agent.

Examples of polymerization solvents to be used in the solution polymerization reaction include aliphatic hydrocarbons, such as butane, n-pentane, n-hexane, n-heptane, n-octane, iso-octane, n-nonane, and n-decane; alicyclic hydrocarbons, such as cyclopentane, methylcyclopentane, cyclohexane, methylcyclohexane, ethylcyclohexane, cycloheptane, cyclooctane, decalin, and norbornane; aromatic hydrocarbons, such as benzene, toluene, xylene, ethylbenzene and cumene; and ethers, such as diethyl ether and tetrahydrofuran.

These polymerization solvents may be used individually or, if desired, in combination.

In the polymerization method of the present invention, the amount of the polymerization catalyst may vary depending on the intended use of the polymer to be used. However, the polymerization catalyst is generally used in an amount of from $1 \times 10^{-6}$mol to $1 \times 10^{-1}$mol, preferably from $5 \times 10^{-6}$mol to $5 \times 10^{-2}$mol, in terms of the molar amount of metal atom per mol of the monomer or monomers.

In the polymerization method of the present invention, the polymerization reaction temperature may vary according to the other polymerization reaction conditions. However, the polymerization reaction temperature is generally from -100 to 150 °C, preferably from -80 to 120 °C, more preferably from -30 to 110 °C, and most preferably from 0 to 100 °C. From a commercial point of view, it is advantageous that the polymerization reaction temperature be from room temperature to 80 °C.

In the polymerization method of the present invention, the polymerization reaction time may vary depending on the intended use of the polymer and the other polymerization reaction conditions. However, the polymerization reaction time is generally not longer than 48 hours, preferably from 1 to 10 hours. Further, it is preferred that the polymerization reaction be conducted in an atmosphere of an inert gas, such as nitrogen, argon or helium. It is especially preferred that such an inert gas be used after being well dried.

With respect to the pressure in the polymerization reaction system, a widely varied pressure can be chosen as long as the pressure is sufficient to maintain the monomer or monomers and the solvent at a liquid state at a polymerization temperature within the above-mentioned range. Further, care must be taken to prevent the intrusion of impurities, which deactivate a polymerization catalyst or the active terminals of the polymer being formed, such as water, oxygen and carbon dioxide, into the polymerization reaction system.

In the polymerization method of the present invention for producing a cyclic conjugated diene polymer, it is preferred that a partial or entire amount of each of the components for the catalyst be subjected to a preliminary reaction to each other (and, optionally aging) to synthesize a complex to be used as the polymerization catalyst prior to the initiation of the polymerization reaction.

Particularly, in the polymerization method of the present invention, it is most preferred that the complex be formed prior to the addition of the cyclic conjugated diene monomer to the reaction system.

When the complex is formed prior to the addition of the cyclic conjugated diene monomer to the reaction

system, various advantages are achieved such that occurrence of side reactions is suppressed, that the polymerization activity of the catalyst is improved, and that the polymer obtained has a narrow molecular weight distribution.

In the polymerization method of the present invention for producing the cyclic conjugated diene polymer, the above-mentioned catalysts may be used individually or, if desired, in combination.

In the polymerization method of the present invention for producing the cyclic conjugated diene polymer, when a predetermined polymerization degree has been reached, conventional additives may be added to the polymerization reaction system. Examples of such conventional additives include a terminal modifier, such as a halogen gas, carbon dioxide, carbon monoxide, an alkylene oxide, an alkylene sulfide, an isocyanate compound, an imino compound, an aldehyde compound, a ketone compound, a thioketone compound, an ester, a lactone, an amido group-containing compound, a urea compound or an acid anhydride; a terminal-branching agent, such as a polyepoxide, a polyisocyanate, a polyimine, a polyaldehyde, a polyanhydride, a polyester, a polyhalide or a metal halide; a coupling agent, such as dimethyldichlorosilane, methyltrichlorosilane, dimethyldibromosilane, methyltribromosilane, titanocene dichloride, zirconocene dichloride, methylene chloride, methylene bromide, chloroform, carbon tetrachloride, silicon tetrachloride, titanium tetrachloride, tin tetrachloride, an epoxidized soybean oil or an ester; a polymerization terminator; a polymerization stabilizer; and an antioxidant.

In the polymerization method of the present invention, conventional polymerization stabilizers and antioxidants can be used. For example, phenol type, organic phosphate type, organic phosphite type, amine type and sulfur type polymerization stabilizers and antioxidants can be used.

The amount of each of the stabilizer and antioxidant to be added is generally from 0.001 to 10 parts by weight per 100 parts by weight of the cyclic conjugated diene polymer.

With respect to the polymerization terminator, any conventional polymerization terminator can be used as long as it can deactivate the polymerization activating species of the polymerization catalyst of the present invention. Preferable examples of polymerization terminators include water, a $C_1$-$C_{10}$ alcohol, a ketone, a polyhydric alcohol (such as ethylene glycol, propylene glycol, or glycerol), a phenol, a carboxylic acid, and a halogenated hydrocarbon.

The amount of the polymerization terminator to be added is generally within the range of from 0.001 to 10 parts by weight per 100 parts by weight of the cyclic conjugated diene polymer. The polymerization terminator may be added before or simultaneously with the addition of a stabilizer and/or an antioxidant. Alternatively, the active terminals of the polymer may be deactivated by contacting the active terminals with a molecular hydrogen.

The separation and recovery of the cyclic conjugated diene polymer of the present invention from the polymerization reaction mixture can be conducted by conventional methods which are generally used for recovering conventional polymers from polymerization reaction mixtures containing the same. Examples of such conventional methods include a steam-coagulation method comprising directly contacting a polymerization reaction mixture with steam; a method comprising adding a poor solvent for a polymer to a polymerization reaction mixture, thereby precipitating the polymer; a method comprising heating a polymerization reaction mixture in a polymerization reactor, thereby distilling off the solvent; and a method comprising extruding a polymerization reaction mixture using an extruder having a vent, while distilling off a solvent through the vent, thereby obtaining a pelletized polymer. A most suitable method can be selected depending on the properties of the solvent used and the cyclic conjugated diene polymer to be obtained.

The cyclic conjugated diene polymer of the present invention may also be modified or crosslinked by adding a polar group thereto by conventional techniques. Examples of such polar groups include a carboxyl group (derived from maleic anhydride, itaconic anhydride, citraconic anhydride, acrylic acid or methacrylic acid), a hydroxyl group, an epoxy group (derived from glycidyl methacrylate or glycidyl acrylate), an amino group (derived from maleimide), an oxazoline group, an alkoxy group (derived from a vinyl compound containing an alkoxysilane group), and an isocyanate group.

Further, in the present invention, additives which are used in conventional polymer materials can be used depending on the intended use of the polymer. Examples of such additives include a thermal stabilizer, an antioxidant, an ultraviolet absorbing agent, a lubricant, a nucleator, a coloring agent, a pigment, a crosslinking agent, a foaming agent, an antistatic agent, an anti-slip agent, an antiblocking agent, a mold-release agent, another polymer material, and an inorganic reinforcing material.

In the present invention, the cyclic conjugated diene polymer may be in a single form, or in a composite form with another polymer material, an inorganic reinforcing material or an organic reinforcing material, depending on the intended use of the polymer.

When the cyclic conjugated diene polymer of the present invention is intended to be used in a composite form with another polymer, such another polymer material may be appropriately selected from conventionally known organic polymers.

Examples of such organic polymers include aliphatic polyamides, such as nylon 4, nylon 6, nylon 8, nylon 9, nylon 10, nylon 11, nylon 12, nylon 46, nylon 66, nylon 610, nylon 612, nylon 636 and nylon 1212; partially aromatic polyamides, such as nylon 4T (T: terephthalic acid), nylon 4I (I: isophthalic acid), nylon 6T, nylon 6I, nylon 12T, nylon 12I and nylon MXD6 (MXD: methaxylylenediamine); amide polymers, such as a copolymer or a blend of the above-mentioned aliphatic polyamides or partially aromatic polyamides; polyesters, such as a polybutylene terephthalate (PBT), a polyethylene terephthalate (PET), a polycarbonate (PC) and a polyarylate (PAR); olefin polymers, such as a polypropylene (PP), a polyethylene (PE), an ethylene-propylene rubber (EPR) and a polystyrene (PSt); conjugated diene polymers, such as a polybutadiene (PBd), a polyisoprene (PIp), a styrene-butadiene rubber (SBR), or a hydride thereof; thiol polymers, such as a polyphenylene sulfide (PPS); ether polymers, such as a polyacetal [e.g., a polyoxymethylene (POM)] and a polyphenylene ether (PPE); acrylic resins; ABS resins; AS resins; polysulfones (PSF); polyether ketones (PEK) and polyamideimides (PAI).

These organic polymers may be used individually or, if desired, in the form of a mixture or copolymer thereof.

Examples of inorganic reinforcing materials include a glass fiber, a glass wool, a carbon fiber, talc, a mica, wollastonite, kaoline, a montmorillonite, a titanium whisker and a rock wool. Examples of organic reinforcing materials include an aramide, a polyimide, a liquid crystal polyester (LCP), a polybenzoimidazole and a polybenzothiazole.

The cyclic conjugated diene polymer of the present invention can be used as an excellent industrial material, such as a plastic, a thermoplastic elastomer, and a modifier for other resins. If desired, a crosslinking agent may be added to the cyclic conjugated diene polymer of the present invention to provide a hardening resin, such as a thermohardening resin, an ultraviolet-hardening resin, or an electron radiation-hardening resin.

## BEST MODE FOR CARRYING OUT THE INVENTION

Hereinbelow, the present invention will be described in more detail with reference to the following Examples, Comparative Examples and Reference Examples.

In the Examples, Comparative Examples and Reference Examples, with respect to chemicals, those which have most high purity among the commercially available ones were used. With respect to solvents, commercially available solvents were treated by a conventional method before use. That is, the solvents were degassed, dehydrated under reflux over an activated metal in an atmosphere of an inert gas, and purified by distillation.

With respect to measurement of the number average molecular weight of a polymer, the polymer was dissolved in 1,2,4-trichlorobenzene, and the resultant solution was subjected to gel permeation chromatography (GPC), to obtain the number average molecular weight, using a calibration curve obtained from a standard polystyrene. Examples of GPC apparatus include one which is manufactured and sold by Waters Assoc. Co., U.S.A.

### Example 1

(Preparation of the polymerization catalyst of the present invention, which is a binuclear or multinuclear complex of an organometallic compound containing a Group IA metal)

In an atmosphere of dried argon gas, a predetermined amount of tetramethylethylenediamine (TMEDA) was dissolved in cyclohexane. The resultant solution was cooled to and maintained at -10 °C. Then, in the atmosphere of dried argon gas, an n-hexane solution of n-butyllithium (n-BuLi) was gradually, dropwise added to the cyclohexane solution of TMEDA in an amount such as would provide a TMEDA / n-BuLi molar ratio of 1/4. After the initiation of addition of the n-hexane solution of n-BuLi, the resultant mixture was gradually cooled to -78 °C. As a result, a tetranuclear complex, having a molar ratio TMEDA / n-BuLi of 1/4, was obtained in the form of white crystals, the structure of which is assumed to be $[(TMEDA)\bullet(n\text{-}BuLi)_4]_\infty$.

### Example 2

(Preparation of the polymerization catalyst of the present invention, which is a binuclear or multinuclear complex of an organometallic compound containing a Group IA metal)

In an atmosphere of dried argon gas, a predetermined amount of tetramethylethylenediamine (TMEDA) was dissolved in cyclohexane. The resultant solution was cooled to and maintained at -10 °C. Then, in the atmosphere of dried argon gas, an n-hexane solution of n-butyllithium (n-BuLi) was gradually, dropwise added to the cyclohexane solution of TMEDA in an amount such as would provide a TMEDA / n-BuLi molar ratio of 1/1. After the initiation of addition of the n-hexane solution of n-BuLi, the resultant mixture was gradually cooled to -78 °C. As a result, a binuclear complex, having a TMEDA / n-BuLi molar ratio of 1/1, was obtained in the form of white crystals, the structure of which is assumed to be $[(TMEDA)_2\bullet(n\text{-}BuLi)_2]$.

Comparative Example 1

(Polymerization using a conventional catalyst system)

A well-dried 100 ml Schlenk tube was purged with dried argon gas by a conventional method. 5.00 g of 1,3-cyclohexadiene and 10.0 g of cyclohexane were charged in the Schlenk tube. While maintaining the temperature of the resultant cyclohexane solution of 1,3-cyclohexadiene at room temperature, an n-hexane solution of n-BuLi was added to the cyclohexane solution in an amount of 0.04 mmol in terms of the amount of lithium atom, to thereby obtain a mixture.

After the addition of n-BuLi, the color, which is characteristic of the cyclohexadienyl anion, quickly disappeared from the mixture, so that a desired polymer was not obtained.

Comparative Example 2

(Polymerization using a catalyst which comprises no binuclear or multinuclear complex of an organometallic compound containing a Group IA metal)

A well-dried 100 ml Schlenk tube was purged with dried argon gas by a conventional method. 5.00 g of 1,3-cyclohexadiene, 10.0 g of cyclohexane and 0.01 mmol of TMEDA were charged in the Schlenk tube. While maintaining the temperature of the resultant cyclohexane solution of 1,3-cyclohexadiene and TMEDA at room temperature, an n-hexane solution of n-BuLi was added to the cyclohexane solution in an amount of 0.04 mmol in terms of the amount of lithium atom, to thereby obtain a mixture.

After the addition of n-BuLi, the color, which is characteristic of the cyclohexadienyl anion, quickly disappeared from the mixture, so that a desired polymer was not obtained.

Comparative Example 3

(Polymerization using a catalyst which comprises no binuclear or multinuclear complex of an organometallic compound containing a Group IA metal)

Substantially the same procedure as in Comparative Example 2 was repeated, except that the amount of TMEDA was changed to 0.04 mmol.

After the addition of n-BuLi, the color, which is characteristic of the cyclohexadienyl anion, quickly disappeared from the mixture, so that a desired polymer was not obtained.

Comparative Example 4

(Polymerization using a catalyst which comprises no binuclear or multinuclear complex of an organometallic compound containing a Group IA metal)

Substantially the same procedure as in Comparative Example 2 was repeated, except that the amount of TMEDA was changed to 0.40 mmol.

After the addition of n-BuLi, the color, which is characteristic of the cyclohexadienyl anion, quickly disappeared from the mixture, so that a desired polymer was not obtained.

Example 3

(Synthesis of a cyclic conjugated diene homopolymer using, as a polymerization catalyst, a binuclear or multinuclear complex of an organometallic compound containing a Group IA metal, according to the present invention)

A well-dried 100 ml Schlenk tube was purged with dried argon gas by a conventional method. 5.00 g of 1,3-cyclohexadiene and 10.0 g of cyclohexane were charged in the Schlenk tube. While maintaining the temperature of the resultant cyclohexane solution of 1,3-cyclohexadiene at room temperature, a polymerization catalyst, which was obtained in Example 1, was added to the cyclohexane solution in an amount of 0.04 mmol in terms of the amount of lithium atom, and a polymerization reaction was conducted for 5 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated

polymer was washed with methanol and then, dried at 80 °C in vacuo, thereby obtaining a final white mass of the polymer.

In the polymerization catalyst used above, lithium atoms were present in an amount as large as 4 equivalents per equivalent of TMEDA. Nevertheless, the respective lithium atoms functioned as equivalent active sites for polymerization, thereby extending a polymer chain by living anionic polymerization. As a result, a cyclohexadiene homopolymer having a number average molecular weight as high as 121,800 and an $\overline{Mw}/\overline{Mn}$ ratio (which is used as a criterion for molecular weight distribution) of 1.14 was obtained in a yield of 98.9 %.

From the above, it is confirmed that in the above polymerization reaction system, the polymerization catalyst of the present invention maintained its complex structure and the polymerization proceeded on the multinuclear complex, thereby extending the polymer chain.

The glass transition temperature (Tg) of the obtained polymer was 89 °C as measured in accordance with the DSC method. The polymer was subjected to injection molding at a cylinder temperature of 300 °C, to thereby obtain a colorless transparent test specimen having a thickness of 3 mm.

The tensile modulus (TM) of the test specimen was 4,020 MPa (1 MPa=10.19716 kgf/cm$^2$) as measured in accordance with ASTM D638. The heat distortion temperature (HDT) of the test specimen was 102 °C as measured under a load of 1.824 MPa (18.6 kgf/cm$^2$) in accordance with ASTM D648.

Example 4

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 3 was repeated, except that a mixed solvent of 1.00 g of toluene and 9.00 g of cyclohexane was used as a polymerization solvent.

The yield of the obtained polymer was 98.7 %. The number average molecular weight of the obtained polymer was 101,900. The $\overline{Mw}/\overline{Mn}$ ratio (criterion for molecular weight distribution) was 1.21.

Example 5

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 3 was repeated, except that the amount of a polymerization catalyst was changed to 0.08 mmol in terms of the amount of lithium atom.

The yield of the obtained polymer was 98.5 %. The number average molecular weight of the obtained polymer was 61,400. The $\overline{Mw}/\overline{Mn}$ ratio (criterion for molecular weight distribution) was 1.18.

Example 6

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 5 was repeated, except that a mixed solvent of 2.00 g of toluene and 18.0 g of cyclohexane was used as a polymerization solvent, and the polymerization temperature was changed to 60 °C.

The yield of the obtained polymer was 72.5 %. The number average molecular weight of the obtained polymer was 43,700. The $\overline{Mw}/\overline{Mn}$ ratio (criterion for molecular weight distribution) was 1.27.

Example 7

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 3 was repeated, except that the polymerization solvent was changed to 20.0 g of cyclohexane, the polymerization temperature was changed to 40 °C and the amount of a polymerization catalyst was changed to 0.06 mmol in terms of the amount of lithium atom.

The yield of the obtained polymer was 99.8 %. The number average molecular weight of the obtained polymer was 83,800. The Mw/Mn ratio (criterion for molecular weight distribution) was 1.16.

Example 8

(Synthesis of a cyclic conjugated diene homopolymer using, as a polymerization catalyst, a binuclear or multinuclear complex of an organometallic compound containing a Group IA metal, according to the present invention)

A well-dried 100 ml pressure-resistant glass bottle, provided with a sealing cap, was purged with dried argon gas by a conventional method. 5.00 g of 1,3-cyclohexadiene and 5.00 g of toluene were charged in the glass bottle. Then, a polymerization catalyst which was obtained in Example 2, was added to the resultant toluene solution of 1,3-cyclohexadiene in an amount of 0.080 mmol in terms of the amount of lithium atom, and a polymerization reaction was conducted at room temperature for 5 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo, thereby obtaining a final white mass of the polymer.

The yield of the obtained polymer was 96.5 %. The number average molecular weight of the obtained polymer was 49,800. The $\overline{Mw}/\overline{Mn}$ ratio (criterion for molecular weight distribution) was 1.51.

Example 9

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 8 was repeated, except that the amount of a polymerization catalyst was changed to 0.040 mmol in terms of the amount of lithium atom.

The yield of the obtained polymer was 98.5 %. The number average molecular weight of the obtained polymer was 64,300. The $\overline{Mw}/\overline{Mn}$ ratio (criterion for molecular weight distribution) was 1.48.

Example 10

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 8 was repeated, except that cyclohexane was used as the polymerization solvent instead of the toluene.

The yield of the obtained polymer was 98.8 %. The number average molecular weight of the obtained polymer was 49,300. The $\overline{Mw}/\overline{Mn}$ ratio (criterion for molecular weight distribution) was 1.28.

Example 11

(Synthesis of a cyclic conjugated diene homopolymer using, as a polymerization catalyst, a binuclear or multinuclear complex of an organometallic compound containing a Group IA metal, according to the present invention)

Substantially the same procedure as in Example 9 was repeated, except that cyclohexane was used as the polymerization solvent instead of the toluene.

The yield of the obtained polymer was 99.1 %. The number average molecular weight of the obtained polymer was 61,700. The $\overline{Mw}/\overline{Mn}$ ratio (criterion for molecular weight distribution) was 1.29.

Reference Example 1

(Synthesis of a cyclic conjugated diene homopolymer having a number average molecular weight of less than 40,000 using, as a polymerization catalyst, a binuclear or multinuclear complex of an organometallic compound containing a Group IA metal, according to the present invention)

4.02 g of 1,3-cyclohexadiene and 4.30 g of toluene were charged in a bottle. A polymerization catalyst, which was obtained in Example 2, was added to the resultant toluene solution of 1,3-cyclohexadiene in an amount of 0.101 mmol in terms of the amount of lithium atom, and a polymerization reaction was conducted at room temperature for 2 hours.

The yield of the obtained polymer was 98.9 %. The number average molecular weight of the obtained polymer

was 38,800. The $\overline{Mw}/\overline{Mn}$ ratio (criterion for molecular weight distribution) was 1.17.

Reference Example 2

(Synthesis of a cyclic conjugated diene homopolymer having a number average molecular weight of less than 40,000 using, as a polymerization catalyst, a binuclear or multinuclear complex of an organometallic compound containing a Group IA metal, according to the present invention)

Substantially the same procedure as in Reference Example 1 was repeated, except that the polymerization temperature was changed to 50 °C.
The yield of the obtained polymer was 99.8 %. The number average molecular weight of the obtained polymer was 39,200. The Mw/Mn ratio (criterion for molecular weight distribution) was 1.19.

Comparative Example 5

(Polymerization using a conventional catalyst system)

A well-dried 100 ml pressure-resistant glass bottle, provided with a sealing cap, was purged with dried argon gas by a conventional method. 4.02 g of 1,3-cyclohexadiene and 4.30 g of toluene were charged in the glass bottle. Then, 1.01 mmol of n-BuLi as a polymerization catalyst was added to the resultant toluene solution of 1,3-cyclohexadiene, and a polymerization reaction was conducted at 50 °C for 8 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo.
The yield of the obtained polymer was 95.9 %. The number average molecular weight of the obtained polymer was only 16,800. The $\overline{Mw}/\overline{Mn}$ ratio (criterion for molecular weight distribution) was 1.87.
The polymer was yellowish, and was very brittle, so that it was impossible to produce a molded article from the polymer.

Comparative Example 6

(Polymerization using a conventional catalyst system)

Substantially the same procedure as in Comparative Example 5 was repeated, except that the amount of n-BuLi was changed to 0.101 mmol.
The catalyst of Comparative Example 6 was present in an amount of 1/10 as much as that of Comparative Example 5. A polymer having a high molecular weight was not obtained. The yield was as low as 45.6 %. The number average molecular weight was 12,500, and the $\overline{Mw}/\overline{Mn}$ ratio (criterion for molecular weight distribution) was 2.05. The polymer was yellowish.

Reference Examples 3 to 8

(Polymerization using a polymerization catalyst of the present invention, which is a complex of an organometallic compound containing a Group IA metal with an amine compound, wherein the amine compound/organometallic compound ratio is varied)

In an atmosphere of dried argon gas, polymerization catalysts having various TMEDA / n-BuLi molar ratios as indicated in Table 1 were prepared. Using these catalysts individually, polymerization reactions were conducted in substantially the same manner as in Example 3, except that the amount of cyclohexane was changed to 5.0 g.
The results of Reference Examples 3 to 8 are shown in Table 1.

Table 1

| | TMEDA/n-BuLi | Yield (%) |
|---|---|---|
| Reference Example 3 | 2/1 | 58.6 |
| Reference Example 4 | 1/1 | 98.4 |

Table 1 (continued)

| | TMEDA/n-BuLi | Yield (%) |
|---|---|---|
| Reference Example 5 | 1/2 | 97.7 |
| Reference Example 6 | 1/4 | 99.5 |
| Reference Example 7 | 1/8 | 69.2 |
| Reference Example 8 | 1/16 | 35.5 |

Comparative Example 7

(Polymerization using a conventional catalyst system)

In an atmosphere of dried argon gas, substantially the same procedure as in Example 3 was repeated, except that the polymerization catalyst was changed to n-BuLi (blend ratio TMEDA / n-BuLi : 0/1) and the amount of cyclohexane was changed to 5.0 g. As a result, a polymerization reaction did not occur, so that a desired polymer was not obtained.

Example 12

(Synthesis of a cyclic conjugated diene copolymer comprising a monomer unit derived from a cyclic conjugated diene monomer and a monomer unit derived from a monomer copolymerizable with the cyclic conjugated diene monomer)

A well-dried 100 ml pressure-resistant glass bottle, provided with a sealing cap, was purged with dried argon gas by a conventional method. 2.31 g of isoprene and 5.00 g of toluene were charged in the glass bottle. Then, a polymerization catalyst which was obtained in Example 2, was added to the resultant toluene solution of isoprene in an amount of 0.08 mmol in terms of the amount of lithium atom, and a polymerization reaction was conducted at room temperature for 4 hours. Subsequently, 2.72 g of 1,3-cyclohexadiene was added to the polymerization reaction system, and the polymerization reaction was further conducted at room temperature for 4 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo, thereby obtaining a white isoprene-cyclohexadiene diblock copolymer.

The copolymer was obtained in a yield of 97.6 %. The number average molecular weight was 38,200 as measured by GPC. The obtained chromatogram exhibited a single peak. The Mw/Mn ratio (criterion for molecular weight distribution) was 1.22.

The polymer chain structure of the copolymer was determined by $^1$H-NMR. It was confirmed that the polymer chain of the copolymer had substantially the same ratio of monomer units as the ratio of monomers charged in the glass bottle.

Example 13

(Synthesis of a cyclic conjugated diene copolymer comprising a monomer unit derived from a cyclic conjugated diene monomer and a monomer unit derived from a monomer copolymerizable with the cyclic conjugated diene monomer)

Substantially the same procedure as in Example 12 was repeated, except that the amount of isoprene was changed to 2.50 g and the amount of 1,3-cyclohexadiene was changed to 2.50 g.

An isoprene-cyclohexadiene diblock copolymer was obtained in a yield of 98.8 %. The number average molecular weight was 34,400 as measured by GPC. The obtained chromatogram exhibited a single peak. The Mw/Mn ratio (criterion for molecular weight distribution) was 1.31.

The polymer chain structure of the copolymer was determined by $^1$H-NMR. It was confirmed that the polymer chain of the copolymer had substantially the same ratio of monomer units as the ratio of monomers charged in the glass bottle.

Example 14

(Synthesis of a cyclic conjugated diene copolymer comprising a monomer unit derived from a cyclic conjugated diene monomer and a monomer unit derived from a monomer copolymerizable with the cyclic conjugated diene monomer)

Substantially the same procedure as in Example 12 was repeated, except that the polymerization temperature was changed to 50 °C.

An isoprene-cyclohexadiene diblock copolymer was obtained in a yield of 98.0 %. The number average molecular weight was 30,700 as measured by GPC. The obtained chromatogram exhibited a single peak. The Mw/Mn ratio (criterion for molecular weight distribution) was 1.20.

The polymer chain structure of the copolymer was determined by $^1$H-NMR. It was confirmed that the polymer chain of the copolymer had substantially the same ratio of monomer units as the ratio of monomers charged in the glass bottle.

Comparative Example 8

(Polymerization using a conventional catalyst system)

Substantially the same procedure as in Example 14 was repeated to obtain a polymer, except that n-BuLi was used as a polymerization catalyst.

The polymer obtained was an isoprene homopolymer.

Example 15

(Synthesis of a cyclic conjugated diene copolymer comprising a monomer unit derived from a cyclic conjugated diene monomer and a monomer unit derived from a monomer copolymerizable with the cyclic conjugated diene monomer)

Substantially the same procedure as in Example 12 was repeated, except that 1,3-cyclohexadiene was first subjected to a polymerization reaction and subsequently, isoprene was added for copolymerization.

An isoprene-cyclohexadiene diblock copolymer was obtained in a yield of 98.5 %. The number average molecular weight was 36,200 as measured by GPC. The obtained chromatogram exhibited a single peak. The Mw/Mn ratio (criterion for molecular weight distribution) was 1.32.

The polymer chain structure of the copolymer was determined by $^1$H-NMR. It was confirmed that the polymer chain of the copolymer had substantially the same ratio of monomer units as the ratio of monomers charged in the glass bottle.

Comparative Example 9

(Polymerization using a conventional catalyst system)

Substantially same procedure as in Example 15 was repeated to obtain a polymer, except that n-BuLi was used as the polymerization catalyst.

The polymer obtained was a cyclohexadiene homopolymer.

Example 16

(Synthesis of a cyclic conjugated diene copolymer comprising a monomer unit derived from a cyclic conjugated diene monomer and a monomer unit derived from a monomer copolymerizable with the cyclic conjugated diene monomer)

A well-dried 5-liter high-pressure autoclave having an electromagnetic induction agitator was purged with dried nitrogen gas by a conventional method. 2,400 g of cyclohexane and 400 g of butadiene were charged in the autoclave. Then, a polymerization catalyst, which was prepared so as to provide a TMEDA / n-BuLi molar ratio of 1/4, was added to the cyclohexane solution of butadiene in an amount of 25.6 mmol in terms of the amount of lithium atom, and a polymerization reaction was conducted at 60 °C for 1 hour. Subsequently, 400 g of 1,3-cyclohexadiene was added to the resultant polymerization reaction system, and the polymerization reaction was further conducted at 40 °C for 6 hours. After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture,

thereby separating a polymer formed therein. The separated polymer was washed with methanol and then, dried at 80 °C in vacuo, thereby obtaining a white butadiene-cyclohexadiene diblock copolymer.

With respect to the obtained copolymer, the number average molecular weight was 44,100 as measured by GPC. The obtained chromatogram exhibited a single peak. The $\overline{Mw}/\overline{Mn}$ ratio (criterion for molecular weight distribution) was 1.36.

The polymer chain structure of the copolymer was determined by $^1$H-NMR. It was confirmed that the polymer chain of the copolymer had substantially the same ratio of monomer units as the ratio of monomers charged in the autoclave.

The obtained copolymer was packed in a mold and subjected to compression molding at 180 °C, to thereby obtain a sample having a thickness of 3 mm.

The tensile modulus (TM) of the sample was 680 MPa (1 MPa = 10.19716 kgf/cm$^2$) as measured in accordance with ASTM D638. The tensile elongation (TE) was 500 % or more.

Example 17

(Synthesis of a cyclic conjugated diene copolymer comprising a monomer unit derived from a cyclic conjugated diene monomer and a monomer unit derived from a monomer copolymerizable with the cyclic conjugated diene monomer)

A well-dried 5-liter high-pressure autoclave having an electromagnetic induction agitator was purged with dried nitrogen gas by a conventional method. 2,720 g of cyclohexane and 154 g of 1,3-cyclohexadiene were charged in the autoclave. Then, a polymerization catalyst, which was prepared so as to provide a TMEDA / n-BuLi molar ratio of 1/4, was added to the cyclohexane solution of 1,3-cyclohexadiene in an amount of 15.36 mmol in terms of the amount of lithium atom, and a polymerization reaction was conducted at 40 °C for 5 hours. Subsequently, 326 g of butadiene was added to the resultant polymerization reaction mixture, and a polymerization reaction was further conducted at 60 °C for 1 hour. After completion of the polymerization reaction, 9.60 mmol of dichlorodimethylsilane was added as a coupling agent to the resultant polymerization reaction mixture, and a further reaction was conducted at 65 °C for 1 hour to thereby effect a coupling of the terminals of a polymer formed in the polymerization reaction mixture.

Then, a large amount of a mixed solvent of methanol and hydrochloric acid was added to the resultant polymerization reaction mixture, thereby separating the polymer formed therein. The separated polymer was washed with methanol and then, dried at 80 °C in vacuo, thereby obtaining a white cyclohexadiene-butadiene diblock copolymer.

With respect to the obtained copolymer, the number average molecular weight was 69,700 as measured by GPC. The obtained chromatogram exhibited a single peak. The Mw/Mn ratio (criterion for molecular weight distribution) was 1.39.

The polymer chain structure of the copolymer was determined by $^1$H-NMR. It was confirmed that the polymer chain of the copolymer had substantially the same ratio of monomer units as the ratio of monomers charged in the autoclave.

The obtained copolymer was packed in a mold and subjected to compression molding at 220 °C, to thereby obtain a colorless transparent test specimen having a thickness of 3 mm.

The tensile modulus (TM) of the test specimen was 6.57 MPa (1 MPa = 10.19716 kgf/cm$^2$) as measured substantially in accordance with ASTM D638 except that the measurement was conducted in a condition of 300 % elongation. The tensile elongation (TE) was 500 % or more.

Example 18

(Synthesis of a cyclic conjugated diene copolymer comprising a monomer unit derived from a cyclic conjugated diene monomer and a monomer unit derived from a monomer copolymerizable with the cyclic conjugated diene monomer)

Substantially the same procedure as in Example 17 was repeated, except that 3.80 mmol of tetrachlorosilane was used as the coupling agent instead of the dichlorodimethylsilane.

With respect to the obtained cyclohexadiene-butadiene radial block copolymer, the number average molecular weight was 120,500 as measured by GPC. The obtained chromatogram exhibited a single peak. The Mw/Mn ratio (criterion for molecular weight distribution) was 1.57.

The polymer chain structure of the copolymer was determined by $^1$H-NMR. It was confirmed that the polymer chain of the copolymer had substantially the same ratio of monomer units as the ratio of monomers charged in the autoclave.

The obtained copolymer was packed in a mold and subjected to compression molding at 220 °C, to thereby obtain a colorless transparent test specimen having a thickness of 3 mm.

The tensile modulus (TM) of the test specimen was 7.06 MPa (1 MPa=10.19716 kgf/cm$^2$) as measured sub-

stantially in accordance with ASTM D638 except that the measurement was conducted in a condition of 300 % elongation. The tensile elongation (TE) was 500 % or more.

Example 19

(Synthesis of a cyclic conjugated diene copolymer comprising a monomer unit derived from a cyclic conjugated diene monomer and a monomer unit derived from a monomer copolymerizable with the cyclic conjugated diene monomer)

A well-dried 100 ml pressure-resistant glass bottle, provided with a sealing cap, was purged with dried argon gas by a conventional method. 2.50 g of 1,3-cyclohexadiene, 2.50 g of styrene and 10.0 g of cyclohexane were charged in the glass bottle. Then, a polymerization catalyst, which was obtained in Example 1, was added to the resultant cyclohexane solution of 1,3-cyclohexadi ene and styrene in an amount of 0.08 mmol in terms of the amount of lithium atom, and a polymerization reaction was conducted at room temperature for 4 hours.

After that period of time, a 10 wt% solution of BHT [2,6-bis(tert-butyl)-4-methylphenol] in methanol was added to the polymerization reaction system, to thereby terminate the polymerization reaction. Then, a large amount of a mixed solvent of methanol and hydrochloric acid was added to the resultant polymerization reaction mixture, thereby separating a polymer formed therein. The separated polymer was washed with methanol and then, dried at 80 °C in vacuo, thereby obtaining a white cyclohexadiene-styrene copolymer.

The yield of the obtained copolymer was 74.8 %. The number average molecular weight of the obtained polymer was 37,100 as measured by GPC. The obtained chromatogram exhibited a single peak. The Mw/Mn ratio (criterion for molecular weight distribution) was 1.53.

The polymer chain structure of the copolymer was determined by $^1$H-NMR. It was confirmed that the polymer chain of the obtained copolymer had a structural composition corresponding to the molar ratio (1/3.4) of the cyclohexadiene monomers/styrene monomers charged in the glass bottle.

Example 20

(Synthesis of a cyclic conjugated diene copolymer comprising a monomer unit derived from a cyclic conjugated diene monomer and a monomer unit derived from a monomer copolymerizable with the cyclic conjugated diene monomer)

Substantially the same procedure as in Example 19 was repeated, except that a mixed solvent of 9 g of cyclohexane and 1 g of toluene was used as the polymerization solvent.

0.5 Hour and 1 hour after the initiation of the polymerization reaction, copolymer test specimens were obtained from the polymerization reaction mixture respectively. With respect to the obtained test specimens, the respective molecular weights thereof were measured by GPC. Each of the chromatograms of the test specimens exhibited a single peak. The number average molecular weights of the copolymers obtained 0.5 hour and 1 hour after the initiation of the polymerization reaction were 16,100 and 33,800, respectively. The Mw/Mn ratios (criterion for molecular weight distribution) of the copolymer test specimens were 1.28 and 1.21, respectively.

The polymer chain structures of the copolymer test specimens were determined by $^1$H-NMR. It was confirmed that the polymer chains of the copolymers, obtained 0.5 hour and 1 hour after the initiation of the polymerization reaction, were each of a taper block configuration, and respectively had structural compositions corresponding to the molar ratios (1/4.9 and 1/2.9) of the cyclohexadiene monomers/styrene monomers charged.

Example 21

(Production of a cyclic conjugated diene block copolymer composition)

A well-dried 5-liter high-pressure autoclave having an electromagnetic induction agitator was purged with dried nitrogen gas by a conventional method.

2,060 g of cyclohexane and 154 g of 1,3-cyclohexadiene were charged in the autoclave. A polymerization catalyst, which was prepared so as to provide a TMEDA / n-BuLi ratio of 1/1, was added to the cyclohexane solution of 1,3-cyclohexadiene in an amount of 25.6 mmol in terms of the amount of lithium atom. A polymerization reaction was conducted at 35 °C for 4 hours. The conversion of 1,3-cyclohexadiene was 97.8 % as measured by gas chromatography.

A sample of the polymerization reaction mixture was taken into methanol. The molecular weight of a polymer formed in the sample was measured by GPC. The color of the polymerization reaction mixture was dark yellow. From that color, it was confirmed that a reaction proceeded in a manner of living anionic polymerization.

Subsequently, 990 g of a 33 wt% solution of butadiene in cyclohexane was added to the polymerization reaction mixture remaining in the autoclave, and a polymerization reaction was further conducted at 60 to 70 °C for 1 hour. A sample of the resultant polymerization reaction mixture was taken into methanol. The molecular weight of a polymer formed in the sample was measured by GPC.

The color of the resultant polymerization reaction mixture was yellow, which was the same color as that of polybutadienyllithium. Thus, it was confirmed that a reaction proceeded in a manner of living anionic polymerizatation.

After completion of the intended polymerization reaction, dimethyldichlorosilane was added as a coupling agent to the polymerization reaction mixture in an amount of 1/2 equivalent mol per equivalent of the lithium atom in the catalyst, followed by stirring at 70 °C for 1 hour.

Then, a sample of the resultant polymerization reaction mixture was taken into methanol. The molecular weight of a polymer formed in the sample was measured by GPC. The obtained polymerization reaction mixture was colorless. Thus, it was confirmed that the active terminals of the polymer had been deactivated by a reaction thereof with the coupling agent.

From the GPC charts of the polymer samples respectively taken in the above three steps, it was confirmed that the peaks in the GPC charts were stepwise shifted to the side of high molecular weight in accordance with the order of the above-mentioned three steps. This indicates that a polymerization reaction proceeded in a manner of living anionic polymerization and a desired cyclic conjugated diene block copolymer composition was formed.

From the proportions of peak areas in the GPC charts of the obtained block copolymer composition, it was confirmed that the block copolymer composition comprised 45 wt% of a polycyclohexadiene-polybutadiene-polycyclohexadiene triblock copolymer and 55 wt% of a polycyclohexadiene-polybutadiene diblock copolymer.

The solvent was distilled off from the polymerization reaction mixture, thereby obtaining a sheet. The sheet obtained from the copolymer composition was then packed in a mold and subjected to compression molding at 220 °C, to thereby obtain a test specimen. Using this test specimen, various properties of the block copolymer composition were evaluated by the following methods.

<Evaluation methods>

(1) Molecular weight:

The number average molecular weight of the block copolymer composition was measured by GPC in terms of the value obtained using a calibration curve of standard polystyrene.

(2) Structural composition and microstructure:

The structural composition and microstructure of the block copolymer composition were measured by $^1$H-NMR (400 MHz; GX-400 FT-NMR: manufactured and sold by JEOL, Ltd., Japan), wherein integration was made 32 times in a 10 w/v % deuteride form of dichlorobenzene as solvent for quantitative determination.

(3) Viscoelastic behavior:

With respect to the storage modulus (E') and the loss modulus (E'') of the block copolymer composition, changes in the E' and E'' values according to the temperature change were individually measured under the conditions shown in Table 2, using DMA spectrometer (983 DMA: manufactured and sold by DuPont Instrument, U.S.A.). The change in E' value according to the temperature change is shown in Fig. 8, together with the change in the loss factor (tan δ) according to the temperature change, wherein the tan 6 value is defined as a ratio E''/E'.

Table 2

| | DMA measurement conditions |
|---|---|
| Thickness of specimen | about 2.0 mm |
| Span | about 18 mm |
| Measuring temperature | -150°C to +200°C |
| Temperature elevation rate | 2°C/min. |
| Mode of measuring frequency | Resonance frequency |
| Measuring device: 983 DMA, manufactured and sold by DuPont Instrument | |

(4) Surface hardness:

The surface hardness (JIS A) was measured at 25 °C.

(5) Tensile strength at break (Tb) (kgf/$cm^2$) and elongation at break (E1) (%)

A test specimen having a size of 20 mm length x 3 mm width x 3 mm thickness was prepared by compression molding. With respect to the above test specimen, the tensile strength at break and elongation at break were measured by conducting a tensile test at 25 °C and a head speed of 20 mm/min in accordance with JIS K6301.

(6) Softening temperature (°C):

The softening temperature was measured, using TMA 100 (manufactured and sold by Seiko Instruments, Inc., Japan) in which a 100 µm needle was used, under a load of 10 g.

(7) Tensile modulus:

The tensile modulus (TM) of the test specimen was measured substantially in accordance with ASTM D638, except that the measurement was conducted in a condition of 300 % elongation. The value [300%Ms (kgf/$cm^2$)] obtained is shown in Table 3.

Example 22

(Production of a cyclic conjugated diene block copolymer composition)

Substantially the same procedure as in Example 21 was repeated, except that tetrachlorosilane was used as a coupling agent in an amount of 1/4 equivalent mol per equivalent of the lithium atom in the catalyst.
From the proportions of the peak areas of the GPC chart of the obtained block copolymer composition, it was confirmed that the block copolymer composition comprised 62 wt% of a radial block copolymer [(polycyclohexadiene-polybutadiene)$_x$SiCl$_{4-x}$, wherein x represents an integer of from 2 to 4], and 38 wt% of a polycyclohexadiene-polybutadiene diblock copolymer.
The solvent was distilled off from the polymerization reaction mixture, thereby obtaining a sheet. The sheet obtained was packed in a mold and subjected to compression molding at 220 °C, to thereby obtain a test specimen. With respect to this test specimen, various properties of the block copolymer composition were evaluated in substantially the same manner as in Example 21.

Example 23

(Production of a cyclic conjugated diene block copolymer composition)

A well-dried 5-liter high-pressure autoclave having an electromagnetic induction agitator was purged with dried nitrogen gas by a conventional method.
2,060 g of cyclohexane and 77 g of 1,3-cyclohexadiene were charged in the autoclave. A polymerization catalyst, which was prepared so as to provide a TMEDA / n-BuLi ratio of 1/1, was added to the resultant cyclohexane solution of 1,3-cyclohexadiene in an amount of 25.6 mmol in terms of the amount of lithium atom. A polymerization reaction was conducted at 35 °C for 3 hours. The conversion of 1,3-cyclohexadiene was 96.5 % as measured by gas chromatography.
Then, 800 g of a 33 wt% solution of butadiene in cyclohexane was added to the above polymerization reaction mixture remaining in the autoclave, and a polymerization reaction was further conducted at 60 to 70 °C for 1 hour. The conversion of butadiene was 100 % as measured by gas chromatography.
Subsequently, 77 g of 1,3-cyclohexadiene was added to the polymerization reaction mixture. A polymerization reaction was further conducted at 35 °C for 3 hours. The conversion of 1,3-cyclohexadiene was 93.3 % as measured by gas chromatography.
After that period of time, methyl alcohol was added as a polymerization terminator to the resultant polymerization reaction mixture in an amount of 0.8 equivalent mol per equivalent of the lithium atom in the catalyst, followed by stirring at 70 °C for 1 hour to thereby deactivate the active terminals of the living polymer formed in the polymerization reaction mixture.
The solvent was distilled off from the polymerization reaction mixture, thereby obtaining a sheet. The sheet

obtained was packed in a mold and subjected to compression molding at 220 °C, to thereby obtain a test specimen. Using this test specimen, various properties of the block copolymer composition were evaluated in substantially the same manner as in Example 21.

Comparative Example 10

(Production of a conventional conjugated diene block copolymer composition)

Substantially the same procedure as in Example 21 was repeated, except that styrene was used instead of the 1,3-cyclohexadiene, thereby obtaining a block copolymer composition.

The solvent was distilled off from the polymerization reaction mixture, thereby obtaining a sheet. The sheet obtained was packed in a mold and subjected to compression molding at 220 °C, to thereby obtain a test specimen. Using this test specimen, various properties of the block copolymer composition were evaluated in substantially the same manner as in Example 21.

Comparative Example 11

(Production of a conventional conjugated diene block copolymer composition)

Substantially the same procedure as in Example 23 was repeated, except that styrene was used instead of the 1,3-cyclohexadiene, thereby obtaining a block copolymer composition.

The solvent was distilled off from the polymerization reaction mixture, thereby obtaining a sheet. The sheet obtained was packed in a mold and subjected to compression molding at 220 °C, to thereby obtain a test specimen. Using this test specimen, various properties of the block copolymer composition were evaluated in substantially the same manner as in Example 21.

With respect to the block copolymer compositions obtained in Examples 21 to 23 and Comparative Examples 10 and 11, the results of evaluation of various properties are shown in Table 3. The ascription of $^1$H-NMR spectrum is shown in Table 4.

Table 3

Structure and properties of novel cyclic conjugated diene copolymer composition

| Example Nos. and Comparative Example Nos. | Molecular weight($x10^4$) *1) | | | Weight ratio of hard segment/ soft segment *2) | Microstructure of butadiene moiety *3) | Surface hardness (JIS A) | Mechanical properties *4) | | | TMA softening temperature (°C)(load: 10g; 100μm needle) |
|---|---|---|---|---|---|---|---|---|---|---|
| | Mw | Mn | Mw/Mn | | | | Tb(kgf/$cm^2$) | El(%) | 300%Ms(kgf/$cm^2$) | |
| Example 21 | 21.3 | 15.3 | 1.39 | 17.5/82.5 | 63.5/36.5 | 61 | 85 *4) | 410 | 45 *4) | 145 |
| Example 22 | 53.5 | 22.5 | 2.38 | 28.5/71.5 | 60.5/39.5 | 73 | 150 *4) | 560 | 60 *4) | 150 |
| Example 23 | 19.8 | 4.1 | 4.83 | 30.0/70.0 | 54.2/45.8 | 72 | 127 *4) | 480 | 56 *4) | 148 |
| Comparative Example 10 | 5.9 | 5.2 | 1.13 | 20.5/79.5 | 55.8/44.2 | 65 | 152 *4) | 657 | 18 *4) | 68 |
| Comparative Example 11 | 4.9 | 4.2 | 1.17 | 35.0/65.0 | 62.4/37.6 | 80 | 225 *4) | 760 | 25 *4) | 74 |

*1) Measured by GPC (in terms of the value obtained from a calibration curve of standard polystyrene)

*2) Weight ratio of hard segment/soft segment, as measured by $^1H$-NMR (A hard segment in Examples 21 to 23 was a polycyclohexadiene monomer unit and a hard segment in Comparative Examples 10 and 11 was a polystyrene monomer unit.)

*3) Ratio of 1,2-bond/1,4-bond in the polybutadiene block, as measured by $^1H$-NMR.

*4) The Tb and 300%Ms values expressed in terms of kgf/$cm^2$ can be expressed in terms of the MPa values shown below:

| | Tb (MPa) | 300%Ms (MPa) |
|---|---|---|
| Example 21 | 8.34 | 4.41 |
| Example 22 | 14.71 | 5.88 |
| Example 23 | 12.45 | 5.49 |
| Comparative Example 10 | 14.91 | 1.77 |
| Comparative Example 11 | 22.06 | 2.45 |

Table 4

Ascription of $^1H$-NMR spectrum

| Chemical shift | Ascription*1) | |
|---|---|---|
| 1.0-3.2 ppm | 1,2 bond of polybutadiene $-CH_2CH(C{=}C)-$ | 3H |
| | 1,4 bond of polybutadiene $-CH_2C{=}CCH_2-$ | 4H |
| | Methylene and methine of polycyclohexadiene | 6H |
| 5.0-5.45 ppm | 1,2 bond of polybutadiene $-C{=}CH_2$ | 2H |
| 5.45-5.8 ppm | 1,4 bond of polybutadiene $-CH{=}CH-$ | 2H |
| 5.8-6.4 ppm | 1,2 bond of polybutadiene $-CH{=}C$ | 1H |
| | polycyclohexadiene $-CH{=}CH-$ | 2H |

Apparatus: GX-400 FT-NMR (400 MHz), manufactured and sold by JEOL

Solvent: deuteride form of orthodichlorobenzene, which was used to form a 10 w/v% solution of the copolymer composition therein.

*1) With respect to the hydrogens to which no chemical shifts are ascribed, no mention is made.

Industrial applicability

The cyclic conjugated diene polymer of the present invention and the polymer composition comprising the same have not only excellent thermal properties in respect of, for example, a melting temperature, a glass transition temperature and a heat distortion temperature, but also excellent mechanical properties, such as high tensile modulus and high flexural modulus. Further, the cyclic conjugated diene polymer of the present invention has not only a high molecular weight sufficient for the polymer to be used as a molded article, but also can be provided in the form of a copolymer of a cyclic conjugated diene monomer with a comonomer copolymerizable with the cyclic conjugated diene monomer, wherein the content of the comonomer and the configuration of the copolymer can be appropriately selected so that the copolymer can have desired thermal and mechanical properties. Therefore, the novel cyclic conjugated diene polymer and the polymer composition comprising the same can be advantageously used in various fields as industrially important materials, such as plastics, and thermoplastic elastomers.

Further, the cyclic conjugated diene polymer of the present invention can be used singly or, if desired, in composite forms with other resins or inorganic materials, in various uses, for example, as materials for parts for automobiles, electric appliances and electronics; films; sheets; and tubes.

The polymerization catalyst used in the method of the present invention has not only a high activity to polymerize a cyclic conjugated diene monomer, so that the polymer can be produced in high yield using the catalyst in a relatively small amount, but also can be used for synthesis of a high molecular weight polymer and copolymer which

have never been produced using conventional catalysts. The polymerization catalyst of the present invention is also useful as a living anionic polymerization catalyst for obtaining polymers having desired structures, so that the catalyst can be widely used for producing conventional polymers by living anionic polymerization.

## Claims

**1.** A cyclic conjugated diene polymer comprising a main chain represented by the following formula (I):

$$[\ -(A)_{\ell}-\ \ -(B)_{m}-\ ] \qquad (I)$$

wherein A and B are monomer units constituting said main chain in which monomer units A and B are arranged in any order, and $\ell$ and m are, respectively, weight percentages of monomer units A and B, based on the total weight of monomer units A and B;

wherein:

A is selected from the class consisting of cyclic conjugated diene monomer units each being independently represented by the following formula (III):

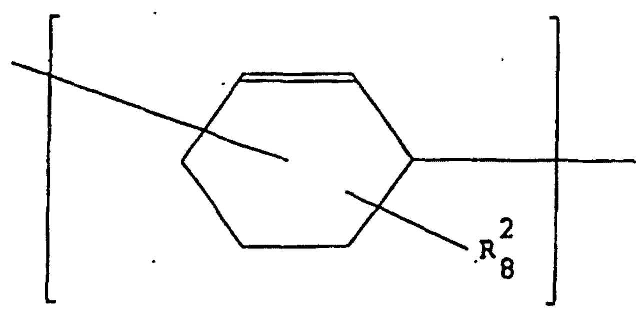

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.

B is selected from either the class consisting of chain conjugated diene monomer units or the class consisting of vinyl aromatic monomer units; and

wherein:

$\ell$ and m satisfy the following requirements:

$\ell + m = 100$,
$0.5 \leq \ell \leq 100$, and
$0 \leq m < 100$,

with the proviso that when $\ell = 100$, said cyclic conjugated diene polymer has a number average molecular weight of from 40,000 to 5,000,000, and when $0.5 \leq \ell < 100$, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene.

**2.** The cyclic conjugated diene polymer according to claim 1, wherein $\ell = 100$, and wherein said A monomer units are comprised of cyclic conjugated diene monomer units which are the same or different.

**3.** The cyclic conjugated diene polymer according to claim 1, wherein, in said block copolymer, said A monomer units are comprised of cyclic conjugated diene monomer units which are the same or different.

**4.** The cyclic conjugated diene polymer according to claim 1, wherein said block copolymer is an at least-tri-block copolymer having a number average molecular weight of from 25,000 to 1,000,000 and comprising at least two Y blocks each containing at least one A monomer unit, and at least one Z block comprised mainly of chain conjugated diene monomer units as monomer units B, wherein the weight ratio of said at least two Y blocks to said at least one Z block is from 3/97 to 97/3.

**5.** The cyclic conjugated diene polymer according to claim 1, wherein said block copolymer is a diblock copolymer having a number average molecular weight of from 25,000 to 1,000,000 and comprising one Y block containing at least one A monomer unit, and one Z block comprised mainly of chain conjugated diene monomer units as monomer units B.

**6.** The cyclic conjugated diene polymer according to any one of claims 1 to 5, wherein at least one of said cyclic conjugated diene monomer units is a 1,3-cyclohexadiene monomer unit or a derivative thereof.

**7.** A cyclic conjugated diene copolymer composition comprising (α) an at least-tri-block copolymer of claim 4 and (β) a diblock copolymer of claim 5, wherein the proportions of components (α) and (β) are, respectively, from 5 to 95 % by weight and from 95 % to 5 % by weight, based on the total weight of components (α) and (β).

**8.** The composition according to claim 7, wherein at least a part of said Y block is comprised of at least one cyclic conjugated diene monomer unit selected from the class consisting of a 1,3-cyclohexadiene monomer unit and a derivative thereof, and said Z block is comprised mainly of units of at least one member selected from the class consisting of a 1,3-butadiene monomer unit and an isoprene monomer unit.

**9.** The composition according to claim 7, wherein said at least-tri-block copolymer (α) has a configuration represented by a formula selected from the group consisting of $Y - (Z - Y)_q$, $(Y - Z)_r$, $Z - (Y - Z)_r$, $[(Z - Y)_q]_r$, $[(Y - Z)_q]_r$, $[(Z - Y)_q - Z]_r$, and $[(Y - Z)_q - Y]_r$ in which Y and Z are as defined above, q is an integer of 1 or more, and r is an integer of 2 or more.

**10.** A method for producing a cyclic conjugated diene polymer comprising a main chain represented by the following formula (I):

$$[\ -(A)_{\ell}-\ -(B)_{m}-\ ] \qquad (I)$$

wherein A and B are monomer units constituting said main chain in which monomer units A and B are arranged in any order, and $\ell$ and m are, respectively, weight percentages of monomer units A and B, based on the total weight of monomer units A and B;

wherein:

A is selected from the class consisting of cyclic conjugated diene monomer units each being independently represented by the following formula (III):

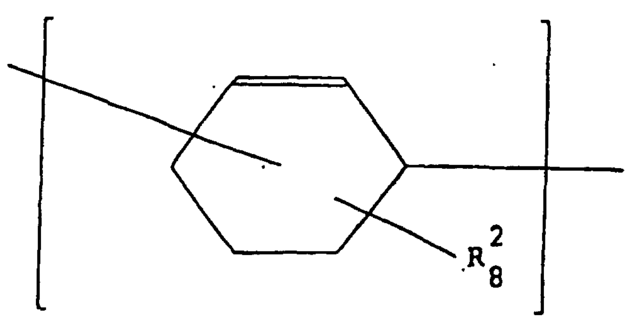

(III)

wherein each $R^2$ independently represents a hydrogen atom, a halogen atom, a $C_1$-$C_{20}$ alkyl group, a $C_2$-$C_{20}$ unsaturated aliphatic hydrocarbon group, a $C_5$-$C_{20}$ aryl group, a $C_3$-$C_{20}$ cycloalkyl group, a $C_4$-$C_{20}$ cyclodienyl group or a 5 to 10-membered heterocyclic group having at least one nitrogen, oxygen or sulfur atom as a heteroatom.
B is selected from either the class consisting of chain conjugated diene monomer units or the class consisting of vinyl aromatic monomer units; and

wherein:

$\ell$ and m satisfy the following requirements:

$\ell + m = 100$,
$0.5 \leq \ell \leq 100$, and
$0 \leq m < 100$,

with the proviso that when $\ell = 100$, said cyclic conjugated diene polymer has a number average molecular weight of from 40,000 to 5,000,000, and when $0.5 \leq \ell < 100$, said cyclic conjugated diene polymer is a block copolymer comprising A monomer units and B monomer units and has a number average molecular weight of from 25,000 to 5,000,000, wherein the number average molecular weight is measured by gel permeation chromatography, using 1,2,4-trichlorobenzene as a solvent and using a calibration curve of a standard polystyrene,
which comprises polymerizing at least one cyclic conjugated diene monomer, or copolymerizing at least one cyclic conjugated diene monomer and at least one comonomer copolymerizable therewith in the presence of a catalyst comprised of a binuclear or multinuclear complex of an organometallic compound containing a metal belonging to Group IA of the Periodic Table with a complexing agent comprised of an amine, wherein the copolymerization of said at least one cyclic conjugated diene monomer and said at least one comonomer is performed to produce a block copolymer, said at least one comonomer being selected from either the class consisting of chain conjugated diene monomers or the class consisting of vinyl aromatic monomers.

**11.** The method according to claim 10, wherein said catalyst is one which has been prepared prior to the polymerization.

**12.** A polymerization catalyst comprising a binuclear or multinuclear complex of an organometallic compound containing a metal belonging to Group IA of the Periodic Table with a complexing agent comprised of an amine.

## Patentansprüche

**1.** Cyclisches, konjugiertes Dienpolymer, umfassend eine Hauptkette, die durch die folgende Formel (I) veranschaulicht ist:

$$[\,-(A)_{\ell}\ -(B)_{m}\,] \qquad (I)$$

wobei A und B Monomereinheiten sind, die die Hauptkette darstellen, in der die A- und B-Monomereinheiten in jeder beliebigen Reihenfolge angeordnet sind und l bzw. m Gewichtsprozente der A- bzw. B-Monomereinheiten, bezogen auf das Gesamtgewicht der A- bzw. B-Monomereinheiten, sind, wobei:

A ausgewählt ist aus der Gruppe bestehend aus cyclischen konjugierten Dienmonomereinheiten, die jeweils unabhängig durch die folgende Formel (III) veranschaulicht sind:

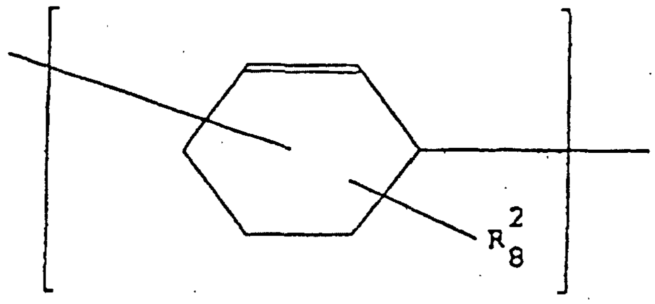

(III)

wobei jedes $R^2$ unabhängig ein Wasserstoffatom, ein Halogenatom, eine $C_1$-$C_{20}$-Alkylgruppe, eine ungesättigte aliphatische $C_2$-$C_{20}$-Kohlenwasserstoffgruppe, eine $C_5$-$C_{20}$-Arylgruppe, eine $C_3$-$C_{20}$-Cycloalkylgruppe, eine $C_4$-$C_{20}$-Cyclodienylgruppe oder eine 5-bis 10gliedrige heterocyclische Gruppe mit wenigstens einem Stickstoff-, Sauerstoff- oder Schwefelatom als Heteroatom darstellt,

B entweder aus der aus kettenförmig konjugierten Dienmonomereinheiten bestehenden Klasse oder der aus vinylaromatischen Monomereinheiten bestehenden Klasse ausgewählt ist und

wobei:

l und m die folgenden Bedingungen erfüllen:

$l + m = 100$,

$0{,}5 \leq l \leq 100$ und

$0 \leq m < 100$,

mit der Maßgabe, dass, wenn l = 100, das cyclische konjugierte Dienpolymer ein Zahlenmittel des Molekulargewichts von 40 000 bis 5 000 000 hat, und, wenn $0{,}5 \leq l < 100$, das cyclische, konjugierte Dienpolymer ein Block-Copolymer ist, das A-Monomereinheiten und B-Monomereinheiten umfasst und ein Zahlenmittel des Molekulargewichts von 25 000 bis 5 000 000 hat, wobei das Zahlenmittel des Molekulargewichts durch Gelpermeationschromatographie unter Verwendung von 1,2,4-Trichlorbenzol als Lösungsmittel und unter Verwendung einer Kalibrierungskurve eines Standard-Polystyrols gemessen wird.

**2.** Cyclisches, konjugiertes Dienpolymer nach Anspruch 1, wobei l = 100 und wobei die A-Monomereinheiten aus cyclischen, konjugierten Dienmonomereinheiten bestehen, die gleich oder verschieden sind.

**3.** Cyclisches, konjugiertes Dienpolymer nach Anspruch 1, wobei im Block-Copolymer die A-Monomereinheiten aus cyclischen, konjugierten Dienmonomereinheiten bestehen, die gleich oder verschieden sind.

**4.** Cyclisches, konjugiertes Dienpolymer nach Anspruch 1, wobei das Block-Copolymer ein wenigstens Triblock-Copolymer mit einem Zahlenmittel des Molekulargewichts von 25 000 bis 1 000 000 ist und wenigstens zwei Y-Blöcke, die jeder wenigstens eine A-Monomereinheit enthalten, und wenigstens einen Z-Block, der hauptsächlich aus kettenförmig konjugierten Dienmonomereinheiten als Monomereinheiten B besteht, umfasst, wobei das Gewichtsverhältnis von den wenigstens zwei Y-Blöcken zum wenigstens einen Z-Block 3/97 bis 97/3 beträgt.

**5.** Cyclisches, konjugiertes Dienpolymer nach Anspruch 1, wobei das Block-Copolymer ein Diblock-Copolymer mit einem Zahlenmittel des Molekulargewichts von 25 000 bis 1 000 000 ist und einen Y-Block, der wenigstens ein A-Monomer enthält, und einen Z-Block, der hauptsächlich aus kettenförmig konjugierten Dienmonomereinheiten als Monomereinheiten B besteht, umfasst.

**6.** Cyclisches, konjugiertes Dienpolymer nach einem der Ansprüche 1 bis 5, wobei wenigstens eine der cyclischen, konjugierten Dienmonomereinheiten eine 1,3-Cyclohexadien-Monomereinheit oder ein Derivat davon ist.

**7.** Zusammensetzung von cyclischen, konjugierten Dienpolymeren, umfassend (α) ein wenigstens Triblock-Copolymer nach Anspruch 4 und (β) ein Diblock-Copolymer nach Anspruch 5, wobei die Anteile der Komponenten (α) bzw. (β) 5 bis 95 Gew.-% bzw. 95 bis 5 Gew.-%, bezogen auf das Gesamtgewicht der Komponenten (α) und (β), betragen.

**8.** Zusammensetzung nach Anspruch 7, wobei wenigstens ein Teil des Y-Blocks aus wenigstens einer cyclischen, konjugierten Dienmonomereinheit, ausgewählt aus der Klasse bestehend aus einer 1,3-Cyclohexadien-Monomereinheit und einem Derivat davon, besteht und der Z-Block hauptsächlich aus Einheiten aus wenigstens einem Element, ausgewählt aus der Klasse bestehend aus einer 1,3-Butadien-Monomereinheit und einer Isopren-Monomereinheit, besteht.

**9.** Zusammensetzung nach Anspruch 7, wobei das wenigstens Triblock-Copolymer (α) eine Konfiguration hat, die durch eine Formel veranschaulicht ist, die ausgewählt ist aus der Gruppe bestehend aus $Y - (Z - Y)_q$, $(Y - Z)_r$, $Z - (Y - Z)_r$, $[(Z - Y)_q]_r$, $[(Y - Z)_q]_r$, $[(Z - Y)_q - Z]_r$ und $[(Y - Z)q - Y]_r$, und wobei Y und Z wie oben definiert sind, q eine ganze Zahl, 1 oder mehr, ist und r eine ganze Zahl, 2 oder mehr, ist.

**10.** Verfahren zur Herstellung eines cyclischen, konjugierten Dienpolymers, umfassend eine Hauptkette, die durch die folgende Formel (I) veranschaulicht ist:

$$[-(A)_l-(B)_m-] \quad (I)$$

wobei A und B Monomereinheiten sind, die die Hauptkette darstellen, in der die A- und B-Monomereinheiten in jeder beliebigen Reihenfolge angeordnet sind und l bzw. m Gewichtsprozente der A- bzw. B-Monomereinheiten, bezogen auf das Gesamtgewicht der A- bzw. B-Monomereinheiten, sind, wobei:

A ausgewählt ist aus der Gruppe bestehend aus cyclischen, konjugierten Dienmonomereinheiten, die jeweils unabhängig durch die folgende Formel (III) veranschaulicht sind:

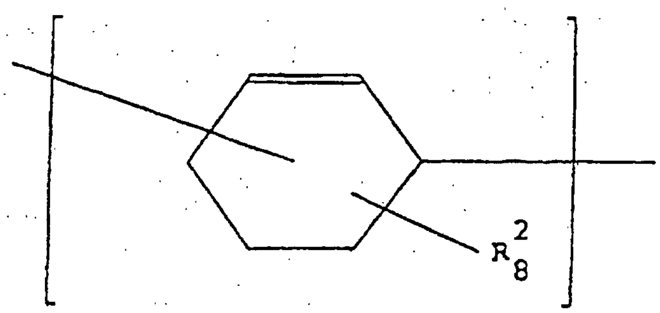

(III)

wobei jedes $R^2$ unabhängig ein Wasserstoffatom, ein Halogenatom, eine $C_1$-$C_{20}$-Alkylgruppe, eine ungesättigte aliphatische $C_2$-$C_{20}$-Kohlenwasserstoffgruppe, eine $C_5$-$C_{20}$-Arylgruppe, eine $C_3$-$C_{20}$-Cycloalkylgruppe, eine $C_4$-$C_{20}$-Cyclodienylgruppe oder eine 5-bis 10gliedrige heterocyclische Gruppe mit wenigstens einem Stickstoff-, Sauerstoff- oder Schwefelatom als Heteroatom darstellt,

B entweder aus der aus kettenförmig konjugierten Dienmonomereinheiten bestehenden Klasse oder der aus vinylaromatischen Monomereinheiten bestehenden Klasse ausgewählt ist und

wobei:

l und m die folgenden Bedingungen erfüllen:

$l + m = 100$,

$0{,}5 \leq l \leq 100$ und

$0 \leq m < 100$,

mit der Maßgabe, dass, wenn $l = 100$, das cyclische konjugierte Dienpolymer ein Zahlenmittel des Molekulargewichts von 40 000 bis 5 000 000 hat, und, wenn $0,5 \leq l < 100$, das cyclische, konjugierte Dienpolymer ein Block-Copolymer ist, das A-Monomereinheiten und B-Monomereinheiten umfasst und ein Zahlenmittel des Molekulargewichts von 25 000 bis 5 000 000 hat, wobei das Zahlenmittel des Molekulargewichts durch Gelpermeationschromatographie unter Verwendung von 1,2,4-Trichlorbenzol als Lösungsmittel und unter Verwendung einer Kalibrierungskurve eines Standard-Polystyrols gemessen wird,
umfassend die Polymerisation wenigstens eines cyclischen, konjugierten Dienmonomers oder die Copolymerisation wenigstens eines cyclischen, konjugierten Dienmonomers und wenigstens eines damit copolymerisierbaren Comonomers in Gegenwart eines Katalysators, der aus einem zweikernigen oder mehrkernigen Komplex einer organometallischen Verbindung, die ein zur Gruppe IA des Periodensystems gehörendes Metall enthält, mit einem aus einem Amin bestehenden Komplexbildner besteht, wobei die Copolymerisation des wenigstens einen cyclischen, konjugierten Dienmonomers und des wenigstens einen Comonomers unter Bildung eines Block-Copolymers erfolgt, wobei das wenigstens eine Comonomer entweder aus der Klasse bestehend aus kettenförmig konjugierten Dienmonomeren oder der Klasse bestehend aus vinylaromatischen Monomeren ausgewählt ist.

**11.** Verfahren nach Anspruch 10, wobei der Katalysator vor der Polymerisation hergestellt wurde.

**12.** Polymerisationskatalysator, umfassend einen zweikernigen oder mehrkernigen Komplex einer organometallischen Verbindung, die ein zur Gruppe IA des Periodensystems gehörendes Metall enthält, mit einem aus einem Amin bestehenden Komplexbildner.

## Revendications

**1.** Polymère diène conjugué cyclique comprenant une chaîne principale représentée par la formule suivante (I) :

$$[ -(A)_l- -(B)_m- ] \quad (I)$$

dans laquelle A et B sont des unités monomère constituant ladite chaîne principale dans laquelle les unités monomère A et B sont disposées dans un ordre quelconque, et 1 et m sont, respectivement, les pourcentages en poids des unités monomère A et B, sur la base du poids total des unités monomère A et B ;
dans laquelle :

A est choisi parmi la classe constituée d'unités monomère diènes conjuguées cycliques, chacune étant indépendamment représentée par la formule suivante (III) :

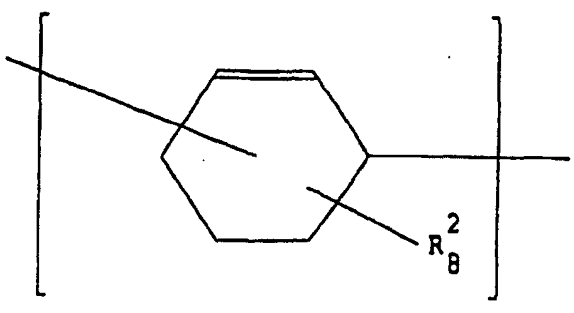

(III)

dans laquelle chaque $R^2$ représente indépendamment un atome d'hydrogène, un atome d'halogène, un groupe alkyle en $C_1$ à $C_{20}$, un groupe hydrocarboné aliphatique insaturé en $C_2$ à $C_{20}$, un groupe aryle en $C_5$ à $C_{20}$, un groupe cycloalkyle en $C_3$ à $C_{20}$, un groupe cyclodiényle en $C_4$ à $C_{20}$ ou un groupe hétérocyclique à 5 à 10 chaînons ayant au moins un atome d'azote, d'oxygène ou de soufre en tant qu'hétéroatome.
B est choisi parmi soit la classe constituée d'unités monomère diène conjugué de chaîne soit la classe constituée d'unités monomère aromatique vinyle ; et

dans laquelle :

*l* et m satisfont aux exigences suivantes :

$l + m = 100$,
$0,5 \leq l \leq 100$, et
$0 \leq m < 100$,

à la condition que quand $l = 100$, ledit polymère diène conjugué cyclique a une masse moléculaire moyenne en nombre de 40 000 à 5 000 000, et quand $0,5 \leq l < 100$, ledit polymère diène conjugué cyclique est un copolymère séquencé comprenant des unités monomère A et des unités monomère B et a une masse moléculaire moyenne en nombre de 25 000 à 5 000 000, dans lequel la masse moléculaire en nombre est mesurée par une chromatographie par perméabilité sur gel, en utilisant du 1,2,4-trichlorobenzène en tant que solvant et en utilisant une courbe d'étalonnage d'un polystyrène standard.

**2.** Polymère diène conjugué cyclique selon la revendication 1, dans lequel $l = 100$, et dans lequel lesdites unités monomère A sont composées d'unités monomère diène conjugué cycliques qui sont identiques ou différentes.

**3.** Polymère diène conjugué cyclique selon la revendication 1, dans lequel, dans ledit copolymère séquencé, lesdites unités monomère A sont composées d'unités monomère diène conjugué cyclique qui sont identiques ou différentes.

**4.** Polymère diène conjugué cyclique selon la revendication 1, dans lequel ledit copolymère séquencé est un copolymère au moins triséquencé ayant une masse moléculaire moyenne en nombre de 25 000 à 1 000 000 et comprenant au moins deux blocs Y contenant chacun au moins une unité monomère A, et au moins un bloc Z composé principalement d'unités monomère diène conjugué de chaîne en tant qu'unités monomère B, dans lequel le rapport en poids desdits au moins deux blocs Y audit au moins un bloc Z est de 3/97 à 97/3.

**5.** Polymère diène conjugué cyclique selon la revendication 1, dans lequel ledit copolymère séquencé est un copolymère diséquencé ayant une masse moléculaire moyenne en nombre de 25 000 à 1 000 000 et comprenant un bloc Y contenant au moins une unité monomère A, et un bloc Z composé principalement d'unités monomère diène conjugué de chaîne telles que des unités monomère B.

**6.** Polymère diène conjugué cyclique selon l'une quelconque des revendications 1 à 5, dans lequel au moins une desdites unités monomère diène conjugué cyclique est une unité monomère de 1,3-cyclohexadiène ou un dérivé de celle-ci.

**7.** Composition de copolymère diène conjugué cyclique comprenant ($\alpha$) un copolymère au moins triséquencé selon la revendication 4 et ($\beta$) un copolymère diséquencé selon la revendication 5, dans laquelle les proportions des composants ($\alpha$) et ($\beta$) sont, respectivement, de 5 à 95 % en poids et de 95 à 5 % en poids, sur la base du poids total des composants ($\alpha$) et ($\beta$).

**8.** Composition selon la revendication 7, dans laquelle au moins une partie dudit bloc Y est composée d'au moins une unité monomère diène conjugué cyclique choisie parmi la classe constituée d'une unité monomère de 1,3-cyclohexadiène et d'un dérivé de celle-ci, et ledit bloc Z est composé principalement d'unités d'au moins un élément choisi parmi la classe constituée d'une unité monomère de 1,3-butadiène et d'une unité monomère d'isoprène.

**9.** Composition selon la revendication 7, dans laquelle ledit copolymère au moins triséquencé ($\alpha$) a une configuration représentée par une formule choisie parmi le groupe constitué de $Y - (Z - Y)_q$, $(Y - Z)_r$, $Z - (Y - Z)_r$, $[(Z - Y)_q]_r$, $[(Y - Z)_q]_r$, $[(Z - Y)_q-Z]_r$, et $[(Y - Z)_q-Y]_r$ dans laquelle Y et Z sont tels que définis ci-dessus, q est un nombre entier de 1 ou plus, et r est un nombre entier de 2 ou plus.

**10.** Procédé de production d'un copolymère diène conjugué cyclique comprenant une chaîne principale représentée par la formule suivante (I) :

$$[-(A)_l-(B)_m]$$ (I)

dans laquelle A et B sont des unités monomère constituant ladite chaîne principale dans laquelle les unités monomère A et B sont disposées dans un ordre quelconque, et *l* et m sont, respectivement, les pourcentages en poids des unités monomère A et B, sur la base du poids total des unités monomère A et B ;

dans laquelle :

A est choisi parmi la classe constituée d'unités monomère diène conjugué cycliques, chacune étant indépendamment représentée par la formule suivante (III) :

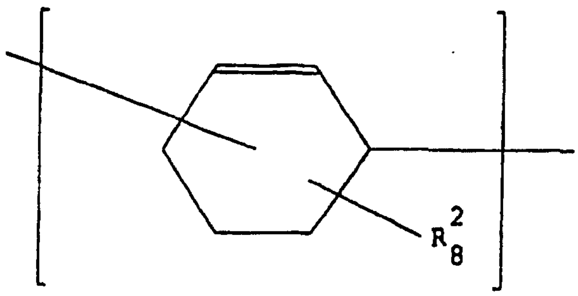

(III)

dans laquelle chaque $R^2$ représente indépendamment un atome d'hydrogène, un atome d'halogène, un groupe alkyle en $C_1$ à $C_{20}$, un groupe hydrocarboné aliphatique insaturé en $C_2$ à $C_{20}$, un groupe aryle en $C_5$ à $C_{20}$, un groupe cycloalkyle en $C_3$ à $C_{20}$, un groupe cyclodiényle en $C_4$ à $C_{20}$ ou un groupe hétérocyclique à 5 à 10 chaînons ayant au moins un atome d'azote, d'oxygène ou de soufre en tant qu'hétéroatome.

B est choisi parmi soit la classe constituée d'unités monomère diènes conjuguées de chaîne soit la classe constituée d'unités monomère aromatique vinyle ; et

dans laquelle :

*l* et m satisfont aux exigences suivantes :

$l + m = 100$,
$0{,}5 \leq l \leq 100$, et
$0 \leq m < 100$,

à la condition que quand $l = 100$, ledit polymère diène conjugué cyclique a une masse moléculaire moyenne en nombre de 40 000 à 5 000 000, et quand $0{,}5 \leq l < 100$, ledit polymère diène conjugué cyclique est un copolymère séquencé comprenant des unités monomère A et des unités monomère B et a une masse moléculaire moyenne en nombre de 25 000 à 5 000 000, dans lequel la masse moléculaire en nombre est mesurée par une chromatographie par perméabilité sur gel, en utilisant du 1,2,4-trichlorobenzène en tant que solvant et en utilisant une courbe d'étalonnage d'un polystyrène standard,

qui comprend la polymérisation d'au moins un monomère diène conjugué cyclique ou la copolymérisation d'au moins un monomère diène conjugué cyclique et d'au moins un comonomère copolymérisable avec celui-ci en présence d'un catalyseur composé d'un complexe binucléaire ou multinucléaire d'un composé organométallique contenant un métal appartenant au composé IA du tableau périodique avec un agent complexant composé d'une amine, dans laquelle la copolymérisation dudit au moins un monomère diène conjugué cyclique et dudit au moins un comonomère est effectuée pour produire un copolymère séquencé, ledit au moins un comonomère étant choisi parmi soit la classe constituée de monomères diènes conjugués de chaîne soit de la classe de monomères aromatiques vinyles.

**11.** Procédé selon la revendication 10, dans lequel ledit catalyseur est un catalyseur qui a été préparé avant la polymérisation.

**12.** Catalyseur de polymérisation comprenant un complexe binucléaire ou multinucléaire d'un composé organométallique contenant un métal appartenant au groupe IA du tableau périodique avec un agent complexant composé d'une amine.

FIG.1

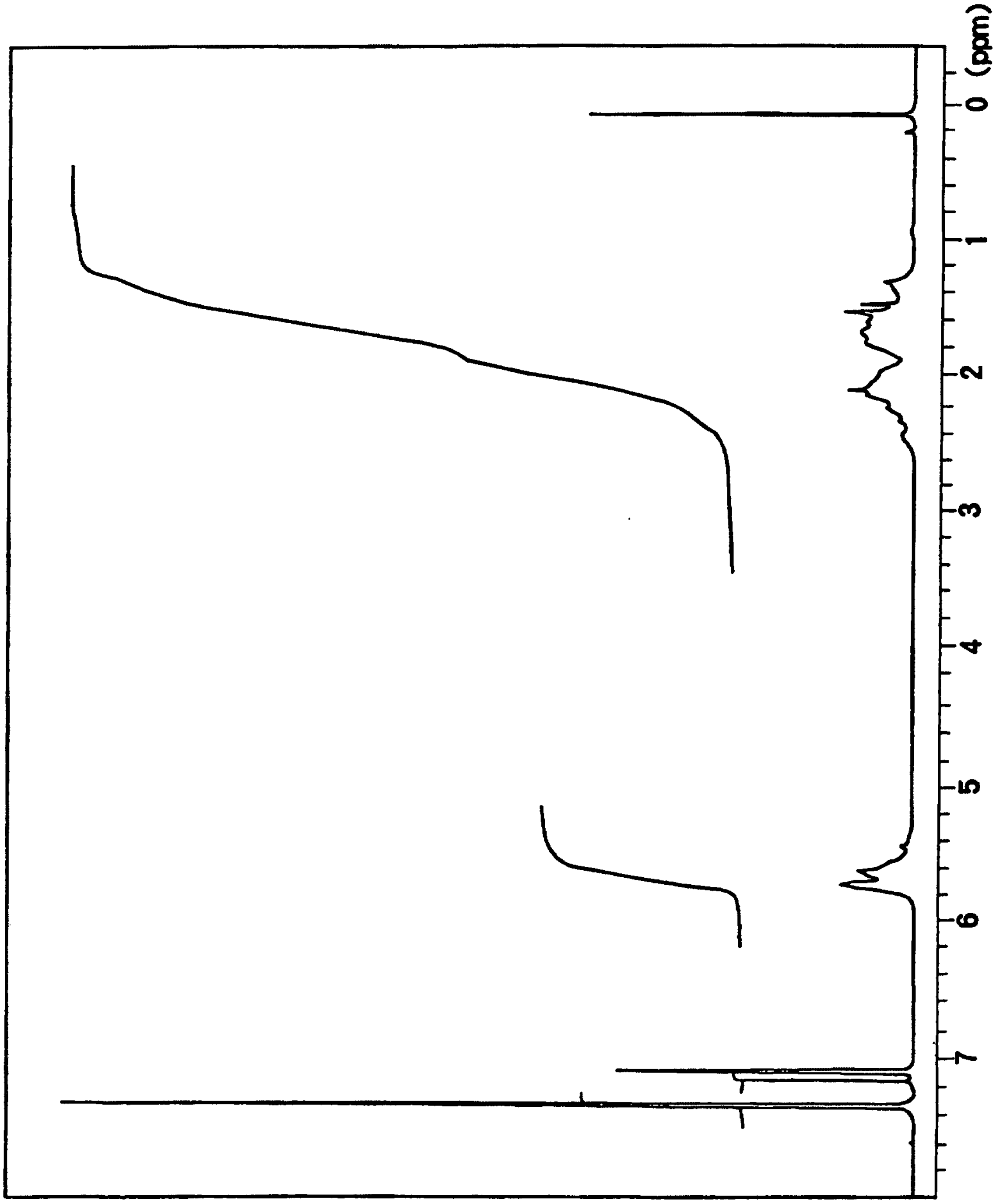

FIG.2

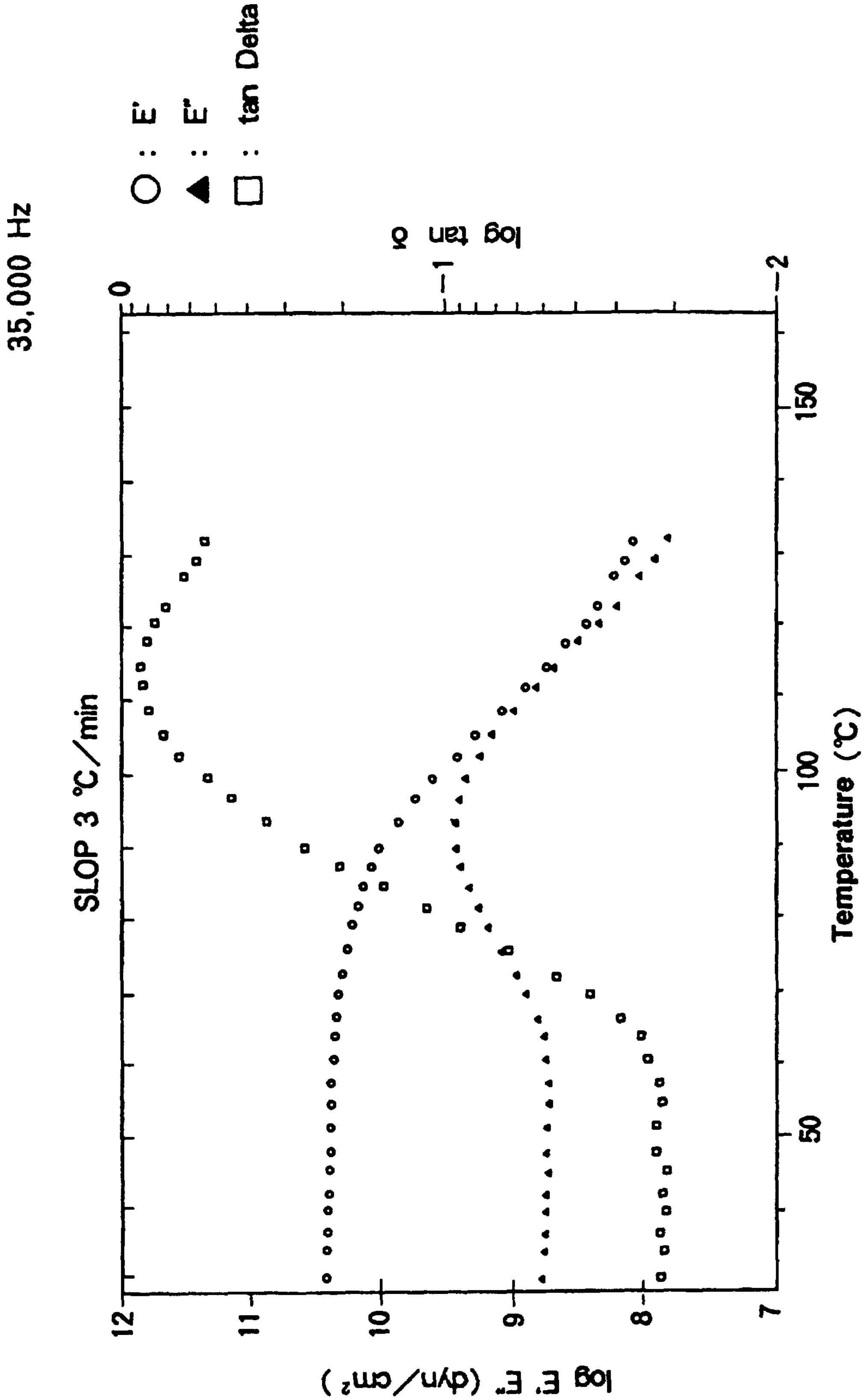
35,000 Hz
SLOP 3 ℃/min
○ : E'
▲ : E"
□ : tan Delta
log tan δ
0
1
2
12
11
10
9
8
7
log E' E" (dyn/cm²)
50
100
150
Temperature (℃)

FIG.3

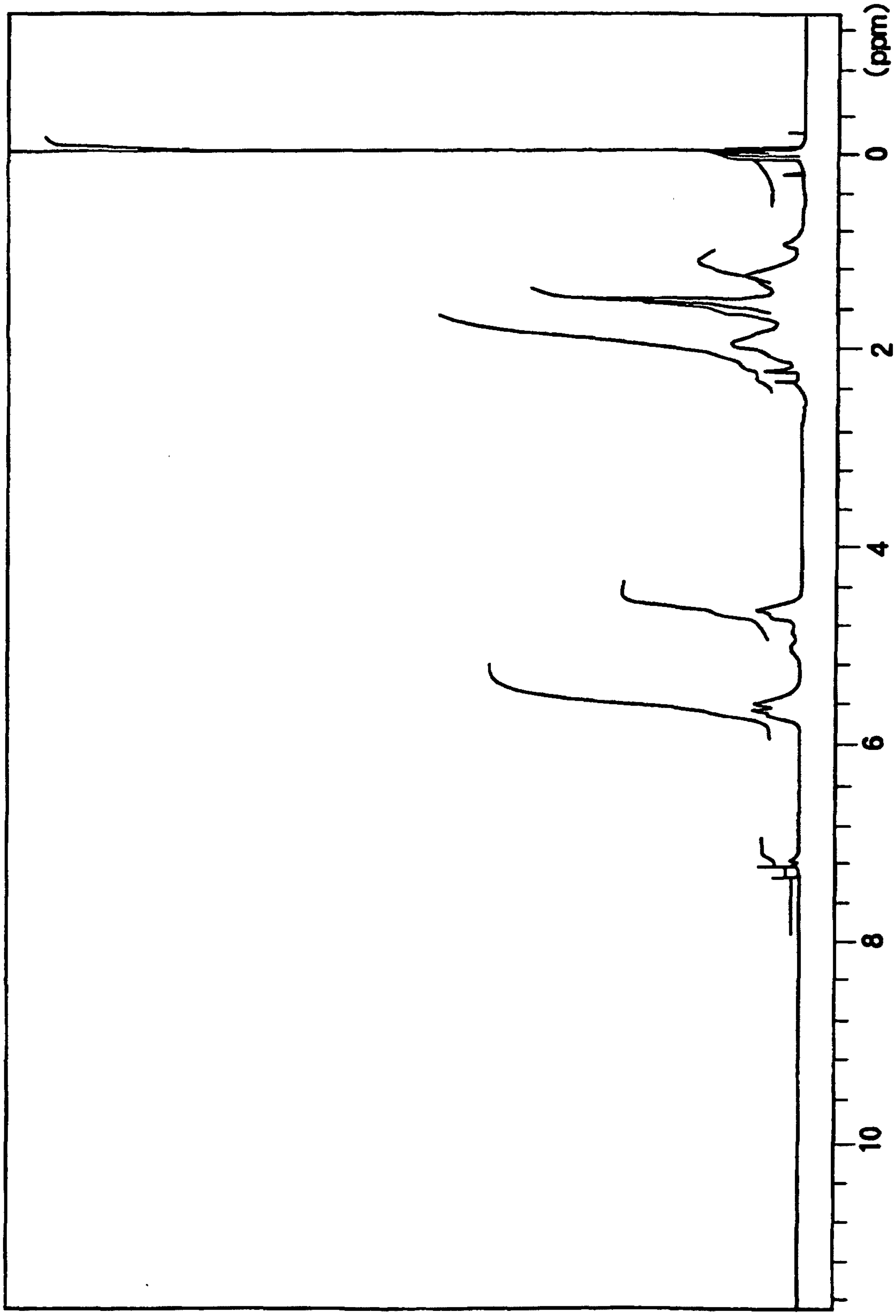

FIG.4

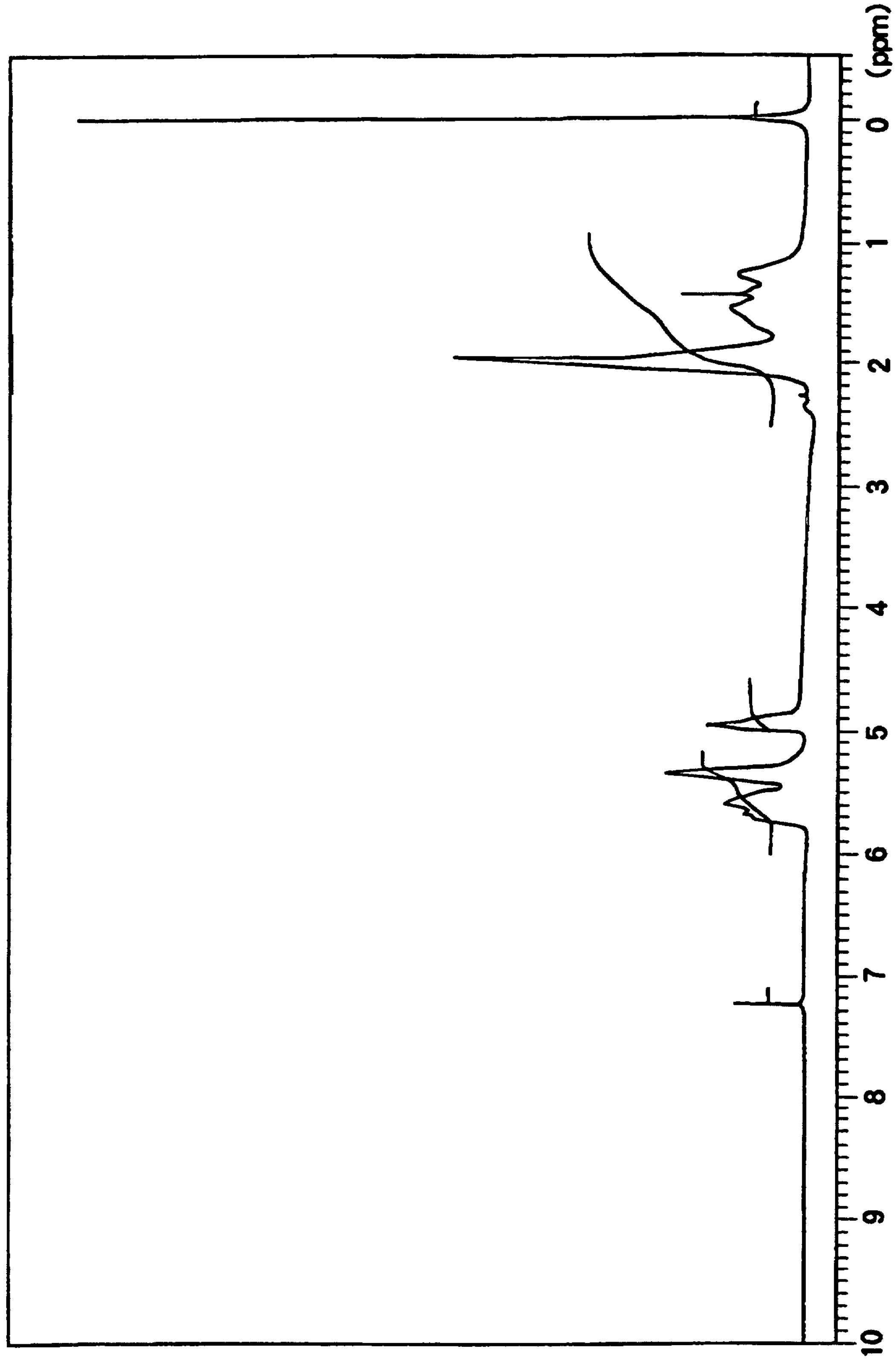

FIG.5

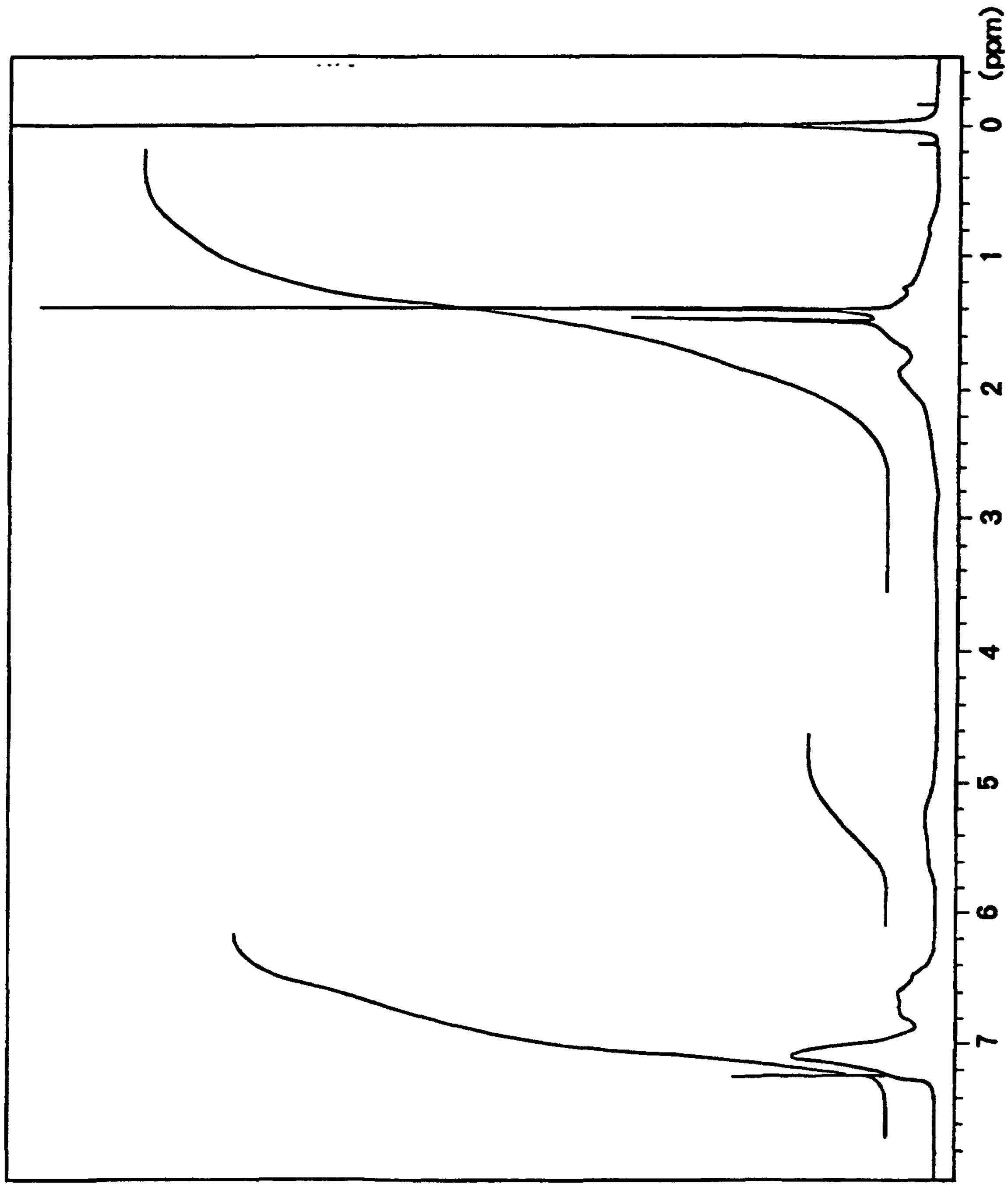

FIG.6

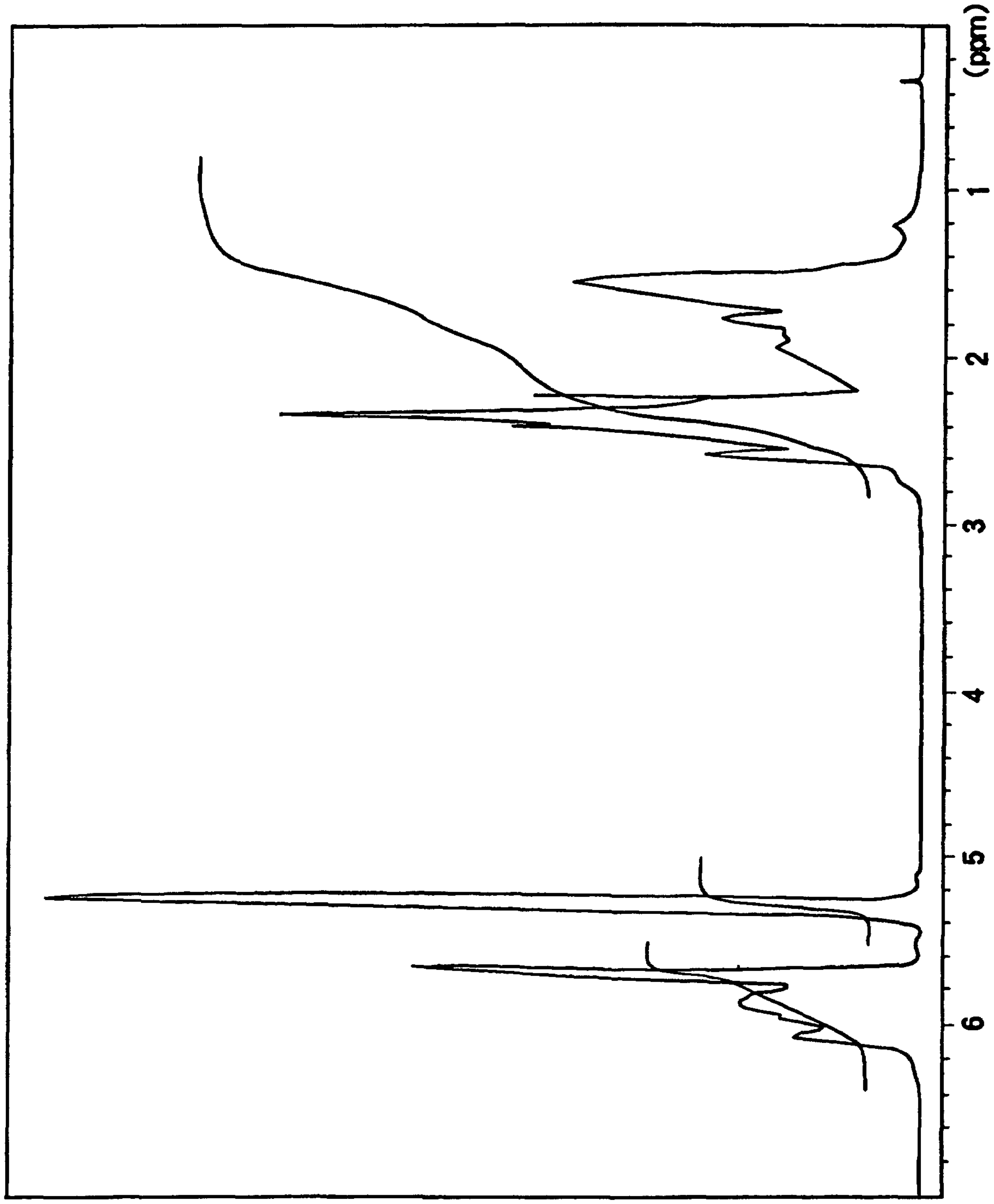

FIG. 7

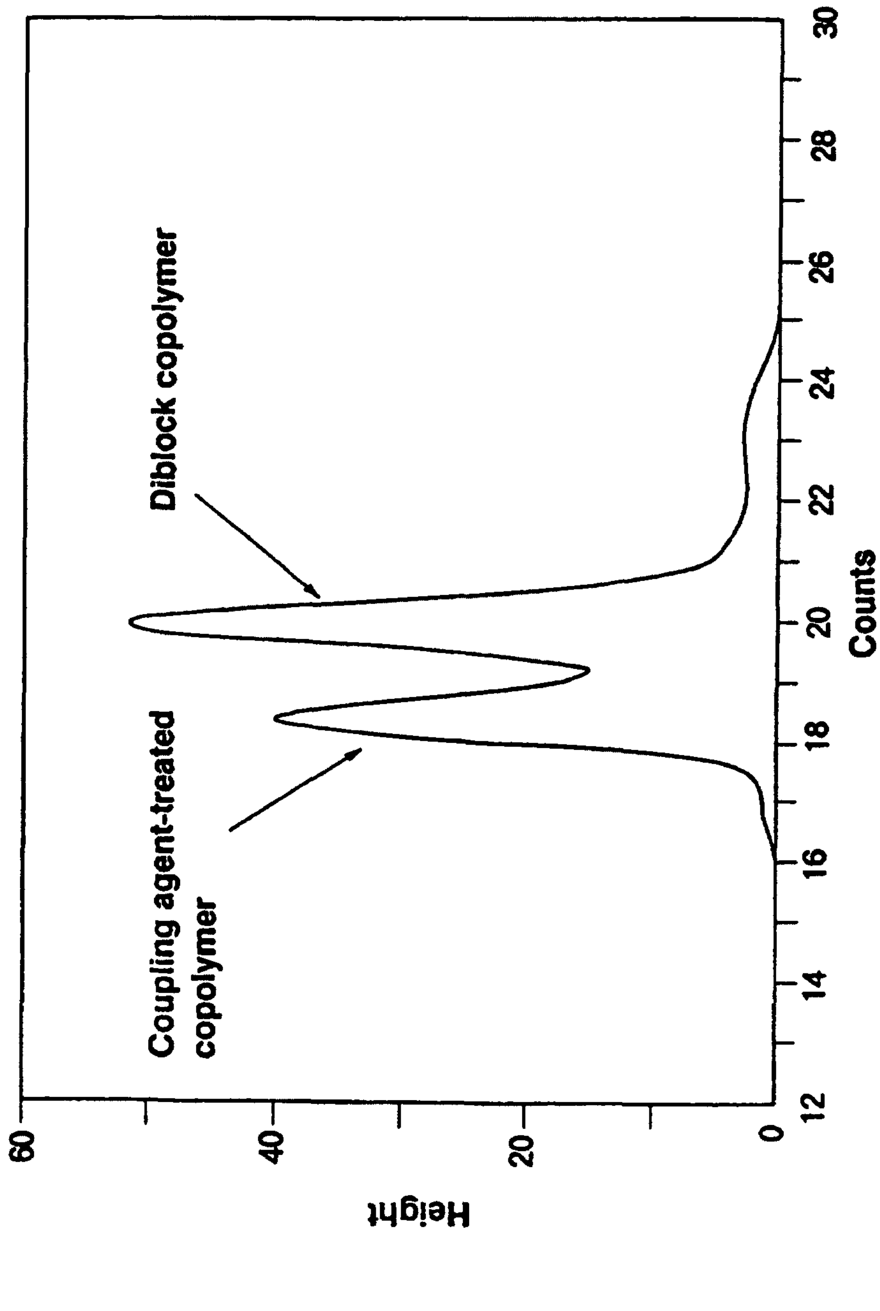
Diblock copolymer
Coupling agent-treated copolymer
Height
Counts
0
20
40
60
12
14
16
18
20
22
24
26
28
30

FIG.8

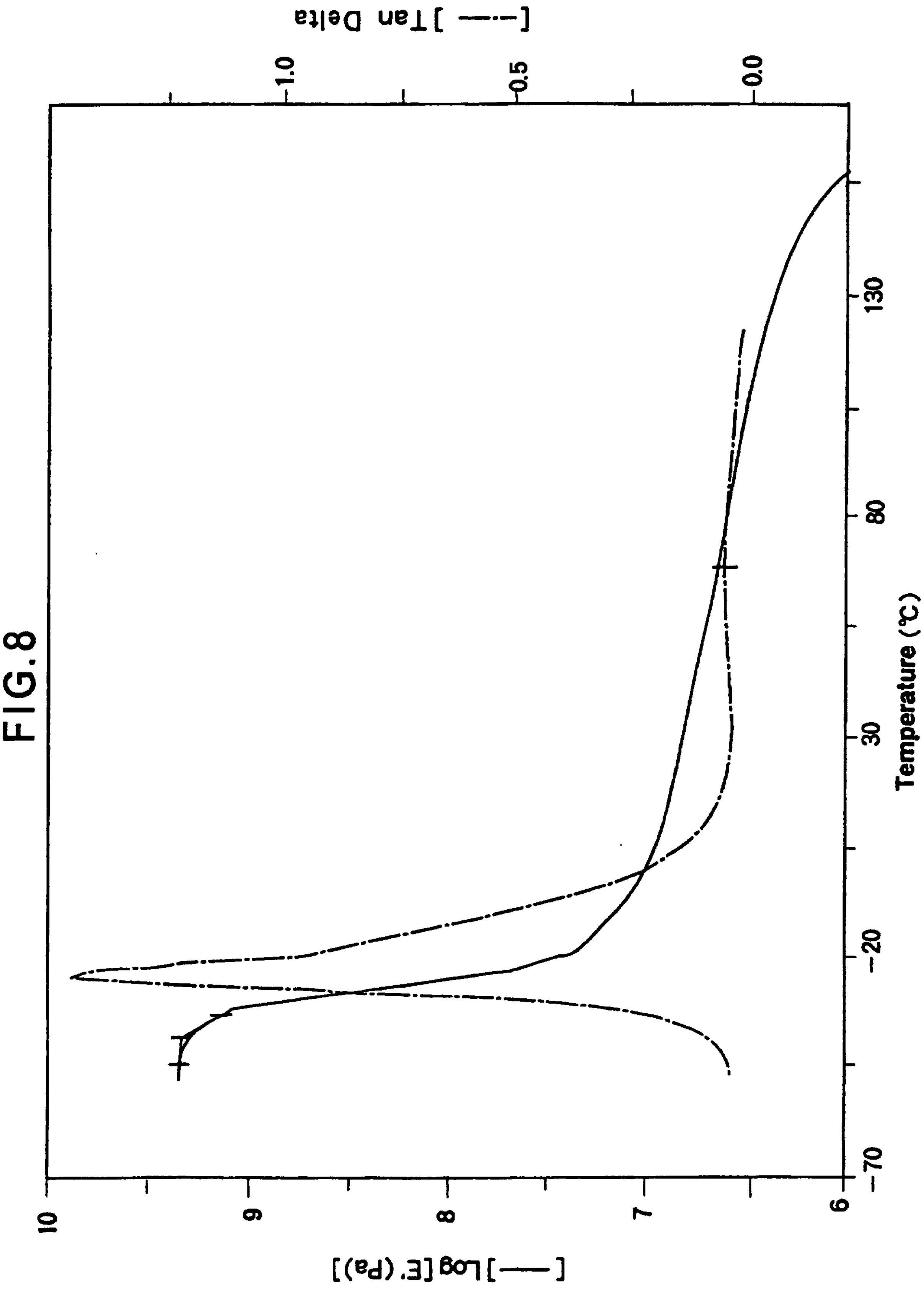

FIG.9

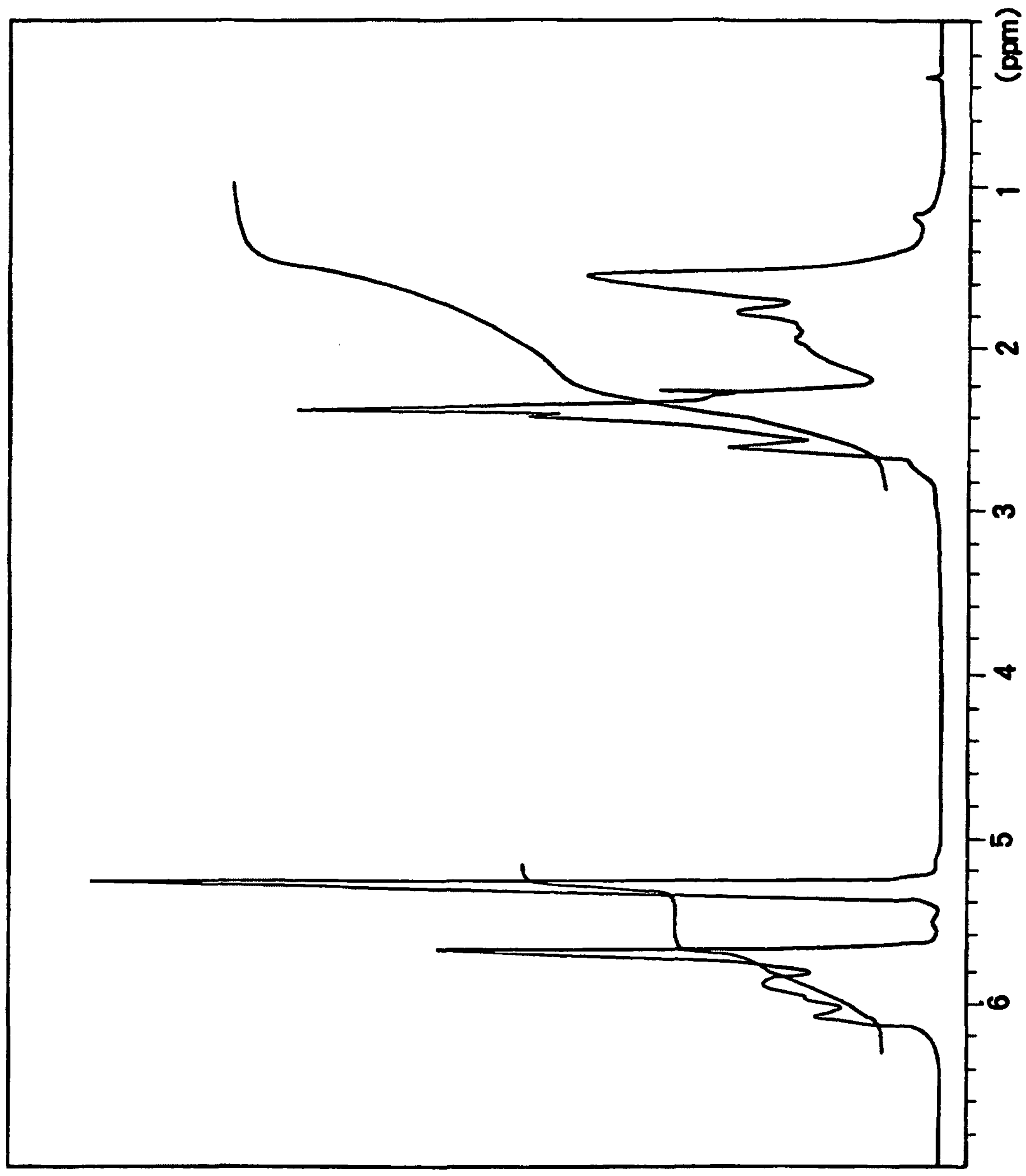

FIG.10

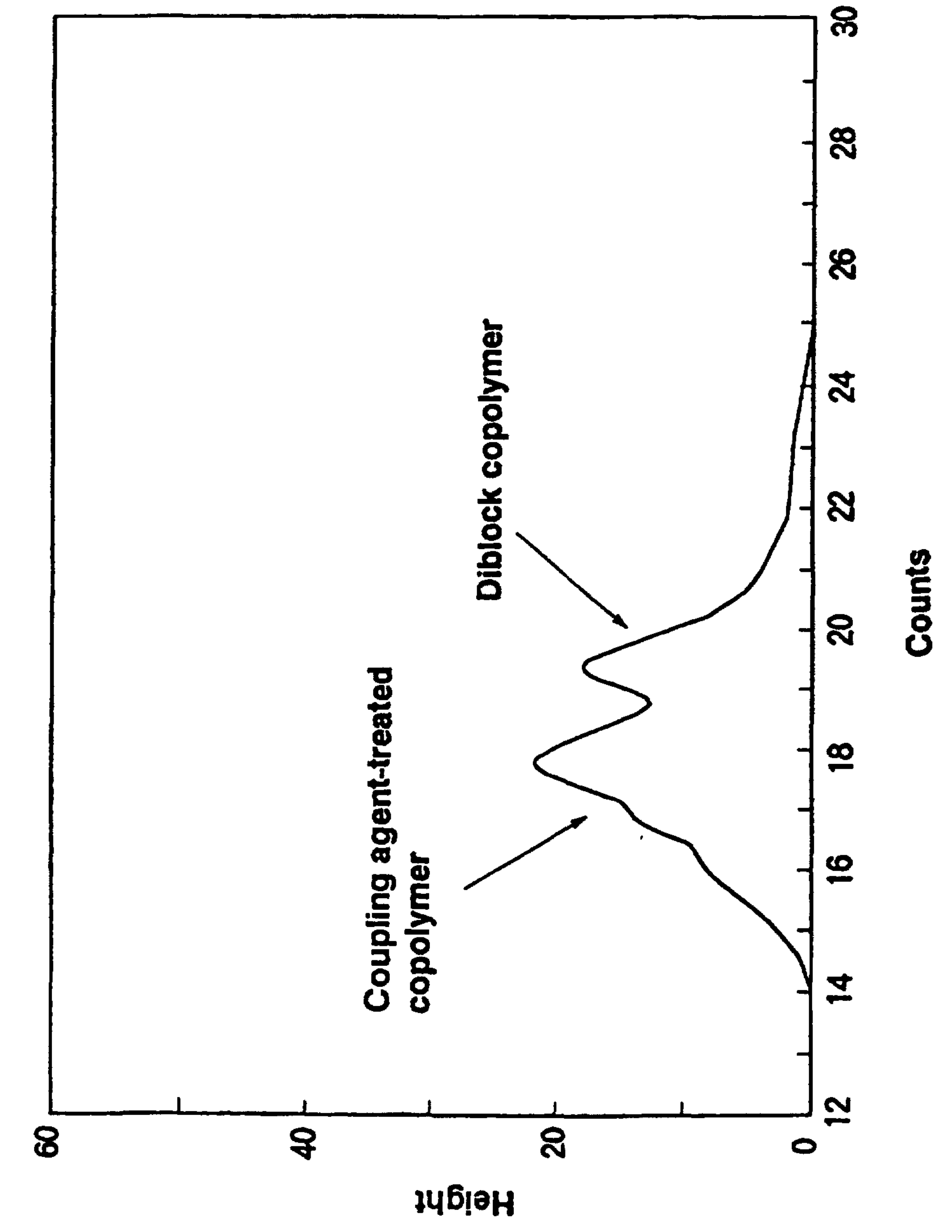
Coupling agent-treated
copolymer
Diblock copolymer
Height
0
20
40
60
12
14
16
18
20
22
24
26
28
30
Counts

FIG.11

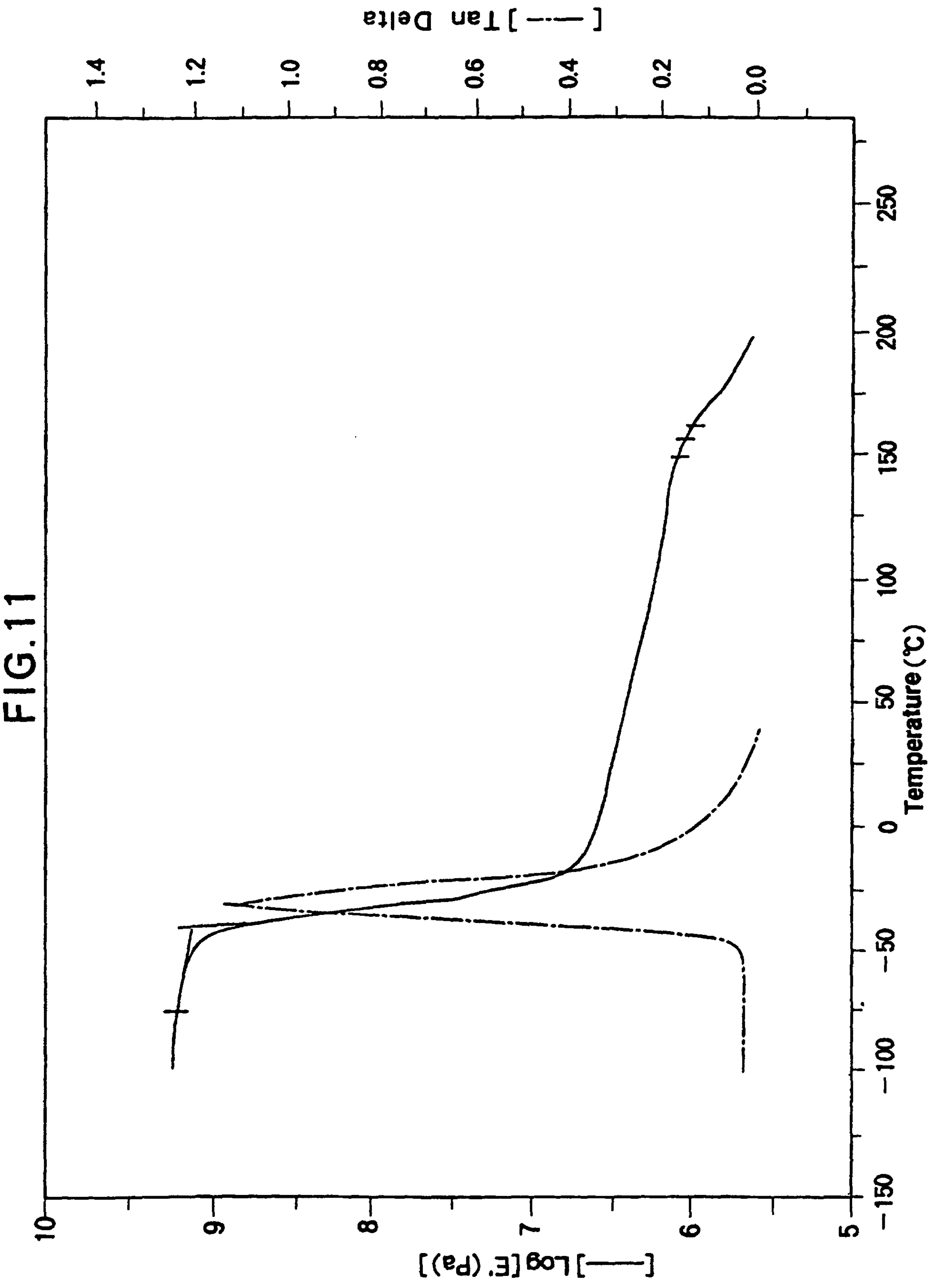
[ —·— ] Tan Delta
1.4
1.2
1.0
0.8
0.6
0.4
0.2
0.0
[ —— ] Log [E' (Pa)]
10
9
8
7
6
5
Temperature (℃)
−150
−100
−50
0
50
100
150
200
250